(19) Europäisches Patentamt
European Patent Office
Office européen des brevets

(11) EP 4 767 814 A1

(12) **EUROPEAN PATENT APPLICATION**

(43) Date of publication:
01.07.2026 Bulletin 2026/27

(21) Application number: 25227788.4

(22) Date of filing: 30.12.2025

(51) International Patent Classification (IPC):
*A01G 9/029* (2018.01)

(52) Cooperative Patent Classification (CPC):
A01G 9/0291

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 30.12.2024 PT 2024119952

(71) Applicant: Oprimee - Innovation Design Engineering
Solutions, Lda
3405-155 Oliveira do Hospital (PT)

(72) Inventor: DOS SANTOS ALMEIDA NUNES, João Miguel
3405-155 OLIVEIRA DO HOSPITAL (PT)

(74) Representative: Patentree
Edificio Net
Rua de Salazares, 842
4149-002 Porto (PT)

(54) **BIODEGRADABLE AND BIOSTIMULANT POT AND USES THEREOF**

(57) The present disclosure relates to a biodegradable pot plant cultivation that simultaneously provides structural support and biostimulant functionality. The pot is made of renewable natural materials, a biodegradable binder, and microalgae incorporated as a biostimulant, that safely decompose in the soil or substrate. Its porous structure ensures balanced water retention and aeration, and mechanical integrity sufficient for handling and early plant growth and creating an ideal environment for plant growth and reducing irrigation needs, increasing too the resilience for climate change.

During use and biodegradation, microalgae and optional incorporated additives are gradually released through hydration, diffusion and disintegration of the material, providing a localised and time-controlled biostimulant effect, synchronised with the healthy and vigorous development of the plant root system. The pot is designed to be placed directly in the soil without removal, thus reducing plastic waste, transplant shock, irrigation needs, and planting and cultivation operation times and costs, making it suitable for applications in horticulture, forestry, and greenhouses. The pot is designed for compatibility with automated planting systems, enhancing horticultural efficiency. It addresses the environmental concern of plastic overuse in horticulture, offering a sustainable, cost-effective, and practical solution for modern horticulture.

Fig. 1

EP 4 767 814 A1

**Description**

**TECHNICAL FIELD**

The present disclosure relates to a biodegradable pot, also named container, to enhance plant growth, offering an eco-friendly and efficient alternative for plant cultivation in horticulture.

**BACKGROUND**

Traditional horticulture faces significant challenges, particularly regarding sustainability, largely due to the excessive use of plastic pots. This reliance leads to serious environmental impacts, such as soil and water pollution, due to the long degradation period of plastics. The overuse of plastic also contributes to ecosystem contamination by microplastics.

Water scarcity is another pressing concern. Limited water availability reduces plant productivity, as plants fail to receive the essential hydration needed for optimal growth. This issue increases production costs due to the need for frequent irrigation and advanced water management strategies. The use of excessive water in traditional horticulture strains local water supplies, exacerbating environmental degradation and depleting vital resources. Addressing both plastic waste and water scarcity is crucial for developing more sustainable and efficient horticultural practices that reduce environmental impact and enhance the overall viability of horticultural operations.

Agricultural practices are increasingly scrutinized by environmentalists and consumers alike. Many modern methods and technologies are viewed negatively, prompting consumers to seek alternatives, such as organic products. In the coming years, environmental concerns are expected to be among the most pressing issues.

Consequently, the growing focus on sustainability has spurred the search for more ecofriendly alternatives in horticulture, aiming to reduce plastic usage and minimize the environmental impact of plant cultivation. Both consumers and producers are becoming more aware of the harmful effects of plastic pollution, leading to an increased demand for sustainable solutions. This transition is not just about waste reduction but also about promoting a comprehensive approach to plant cultivation that enhances environmental health.

Sustainable horticulture practices encompass a variety of strategies aimed at conserving resources and reducing environmental impacts. These include the use of renewable materials, optimization of water usage, and implementation of environmentally friendly pest control methods. By adopting these practices, the horticulture industry can contribute to broader environmental goals, such as reducing greenhouse gas emissions and preserving biodiversity. The significance of sustainability in horticulture cannot be overstated, as it directly affects ecosystem health and the quality of life for future generations.

Efforts to make horticulture more sustainable also require substantial investments in research and development. Innovations in materials science, biotechnology, and agricultural engineering are essential for creating effective and sustainable alternatives to traditional practices. As awareness and concern for environmental issues continue to grow, the drive for sustainability in horticulture is likely to intensify, leading to further advancements and the adoption of eco-friendly practices.

In response to increasing environmental concerns, there has been a surge in the development of biodegradable pots. These pots naturally decompose in the soil, reducing the need for waste management and minimizing environmental pollution. Their decomposition process enriches the soil, contributing to a healthier growing environment for plants.

The development of biodegradable pots aligns with the principles of a circular economy, which emphasizes the reuse and recycling of materials to create a closed-loop system. By utilizing renewable resources and designing products that can safely return to the environment, biodegradable pots represent a significant advancement toward more sustainable horticultural practices. These innovations help decrease the volume of waste sent to landfills and reduce the environmental footprint of horticultural operations.

Despite their benefits, conventional biodegradable pots still face challenges regarding efficiency and functionality. Issues such as durability, water retention, and nutrient delivery must be addressed to ensure these pots can support healthy plant growth.

The production costs of these pots can be significantly high due to the materials used, such as coconut fiber and bioplastics, making them less economically accessible for consumers. Even though they are biodegradable, some materials, like peat, have considerable environmental impacts during their extraction and manufacturing processes. Additionally, durability is a concern, as many of these pots degrade rapidly upon contact with water, compromising their functionality even before plant transplantation. This highlights the need for significant advancements in this area to foster more sustainable practices in gardening and agriculture.

Another significant limitation is the potential inconsistency in nutrient delivery. Unlike plastic pots, which can be employed with various fertilization strategies, biodegradable pots must balance decomposition with nutrient availability. Ensuring that biodegradable pots degrade at the appropriate rate to support plant growth without depriving the soil of essential nutrients poses a critical challenge that requires attention. This delicate balance necessitates careful selection and combination of materials to produce pots that are both eco-friendly and functional.

Continuous research and development are necessary to improve the performance of biodegradable pots, making them a viable and effective alternative to traditional plastic pots in all aspects of horticultural production.

To overcome these limitations, the integration of biostimulants into the composition of biodegradable pots has been explored. This approach addresses structural and nutritional challenges while leveraging the benefits of biostimulants to promote healthier and more resilient plants.

Biostimulants are essential for plant growth and development, as they provide vital nutrients, stimulate metabolism, and enhance resistance to various stresses, both biotic and abiotic. Derived from natural sources like seaweed extracts, humic substances, and beneficial microorganisms, these substances can significantly boost plant health and productivity. By improving nutrient uptake and enhancing soil health, biostimulants contribute to more sustainable and efficient horticultural practices.

The application of biostimulants in horticulture not only fosters plant growth but also strengthens resilience against environmental stresses such as drought, extreme temperatures, and pests. By fortifying plant defenses and promoting vigorous growth, biostimulants can lessen reliance on chemical pesticides and fertilizers, thereby mitigating the environmental impact of horticultural practices. The integration of biostimulants into biodegradable pots exemplifies the potential for innovative solutions to address sustainability challenges in horticulture.

The development of sustainable horticultural practices, including the use of biodegradable pots enhanced with biostimulants, represents a significant advancement toward reducing environmental impact and promoting long-term viability in plant cultivation.

The patent U.S. Pat. No. 8,088,460 discloses a disposable pot made from biodegradable material. The pot's wall consists of a biodegradable polymer, chosen from a polyester or a starch-derived polymer, or a mixture of both, with a thickness that allows the pot to retain its shape. While this disposable pot represents a commendable innovation, it has several shortcomings that could enhance its effectiveness. Specifically, it lacks biostimulant properties, limiting its potential positive influence on plant growth. Moreover, its composition, primarily of biodegradable polymers like polyesters and starch-based materials, may not decompose effectively in natural settings and could require industrial composting facilities for proper breakdown. Furthermore, although the materials are biodegradable, their renewability is not specified, potentially raising concerns regarding long-term sustainability.

The WO20219044726A1 patent discloses a nursery pot containing cultivating soil and a packaging bag that encloses the soil, designed to serve as a growth medium for plant seedlings over a predetermined period. This invention reduces transportation and storage costs. Similarly, U.S. Pat. No. 20160050857 discloses a plant pot system that eliminates the need for transplanting.

While these innovations are important, they address the transplantation issue primarily from a labor perspective. There remains a need for biodegradable pots to be improved so they can also function as biostimulants.

The WO2023048561 patent describes a plant pot characterized by a separate bottom plate and side wall. This design allows for easy removal of the plant from the pot without damaging its roots. The bottom plate features one or more holes for draining excess water from the growth medium and is made from a vegetable material or biodegradable plastic, preferably coconut fibers. However, the side wall is made from plastic material.

The patent U.S. 2020/0375195 introduces a biostimulant that achieves microbial inactivation through physical, biochemical, chemical, or physicochemical methods. This innovation enhances the effectiveness of plant growth, addressing a significant gap in existing biodegradable pots.

The patent U.S. 2020/0214286 offers a biostimulant that provides nutritional support to plants. However, despite its sustainable attributes, it is intentionally produced for this purpose without utilizing waste materials, limiting its potential for recycling.

Additionally, U.S. 2021/0251230 employs chemical biostimulants that may not be environmentally friendly. These developments highlight the necessity for biodegradable pots that not only address transplantation and labor concerns but also incorporate sustainable biostimulant properties, thereby promoting healthier plant growth and long-term ecological balance.

Continuous research and development are essential to enhance the performance of biodegradable pots, establishing them as a viable and effective alternative to traditional plastic pots across all facets of horticultural production, which contribute to environmental waste. Concurrently, the demand for plant biostimulants, which promote plant growth and resilience under abiotic stresses such as drought and salinity, has increased. However, there remains a need for an innovative solution that integrates biostimulants into the pot itself, providing sustained delivery directly to the plant while minimizing waste and environmental impact.

These facts are disclosed in order to illustrate the technical problem addressed by the present disclosure.

**GENERAL DESCRIPTION**

The present disclosure relates to a biodegradable and biostimulant pot, also named container, that enhances plant growth and creates an efficient, eco-friendly alternative for horticulture.

The present disclosure relates to a biodegradable pot that also acts as a biostimulant, promoting healthy plant growth due to the inclusion of microalgae. It addresses the environmental concern of plastic overuse in horticulture, offering a sustainable alternative. Its shape allows automated planting, enhancing efficiency, while its biodegradable composition and porous material ensures balanced water retention and root aeration, creating an ideal environment for plant growth and reducing irrigation needs. This sustainable solution provides ecological and economic benefits, standing out in the horticultural field.

The disclosed subject matter relates to a biodegradable pot for plant growth formed from a composite material comprising a natural cellulosic filler, a biodegradable binder, and microalgae acting as a biostimulant. The pot exhibits a controlled combination of porosity, mechanical strength, and water retention, enabling it to maintain functional integrity during early plant development while undergoing progressive biodegradation after placement in soil or substrate.

Surprisingly, it has been found that the incorporation of microalgae within a porous cellulosic matrix not only provides biostimulant activity but also contributes to the regulation of moisture availability and nutrient release as the pot biodegrades. The interaction between the microalgae, the natural filler, and the binder results in a structure that supports plant growth during cultivation and subsequently integrates into the soil without generating waste, thereby reducing transplant shock and improving root establishment.

In an aspect of the present disclosure, the biodegradable and biostimulant pot for ecofriendly horticultural use comprises a mixture of water and microalgae in its composition, leveraging the biostimulant properties of microalgae.

In an embodiment for better results, the biodegradable and biostimulant pot is composed of natural materials, namely fillers, from gorse, heather, eucalyptus, and/or other cellulosic biomass sources, which provides a sturdy and biodegradable structure that decomposes safely in the soil after use.

In another embodiment, the shape of the biodegradable and biostimulant pot of the present disclosure simplifies and enhances the efficiency of the planting process.

In another embodiment, the biodegradable and biostimulant pot is made of porous material, that enables water retention and controlled release capabilities, maintaining adequate moisture levels for plants and reducing the need for frequent irrigation.

The present disclosure describes a sustainable and effective solution for horticulture, combining biodegradability with additional benefits for plant growth, providing important economic and ecological benefits, that includes:

   water with microalgae into its composition conferring the biostimulant properties;

   natural fillers from gorse, heather, eucalyptus, and/or other cellulosic biomass sources that decompose safely in the soil after use;

   a shape that simplifies and enhances the efficiency of the planting process;

   porous material, that enables controlled water retention and release.

An aspect of the present disclosure relates to a biodegradable pot for plant growth, comprising:

   a microalga as biostimulant to promote healthy plant growth through the gradual release of nutrients into the soil/substrate;
   a natural filler that decomposes in the soil/substrate; and
   a suitable binder, such as an aqueous solution;
   wherein the natural filler is selected from a list consisting of: gorse, heather, eucalyptus, or cellulose from biomass sources, ensuring the pot is biodegradable;
   optionally, the pot comprises a plurality of drainage holes or slits configured to facilitate water drainage while maintaining optimal moisture levels for biostimulant activation as well as root aeration.

An aspect of the present disclosure relates to a biodegradable pot for plant growth, comprising: a microalga as biostimulant; a natural cellulosic filler; and a suitable biodegradable binder; wherein the microalga is structurally embedded within a porous matrix formed by the natural filler and the binder, such that the pot provides controlled water retention and progressive release of biostimulant compounds during biodegradation in soil or substrate; wherein the natural filler is a cellulosic filler selected from fibrous and/or comminuted/ground biomass derived from: gorse, heather, broom, eucalyptus, or cellulose, or combinations thereof; optionally, the pot comprises a plurality of drainage holes or slits.

In an embodiment, the microalga may be incorporated in the form of: whole microalga, microalga cell, microalga extract, microalga powder, microalga pigment, microalga lipid, microalga protein, or microalga biomass.

In an embodiment, the natural filler may be incorporated in the form of biomass, fiber, powder, shredded material, or extract; preferably biomass.

In an embodiment, the biodegradable pot described in the present disclosure comprises:

a base;
a body; and
a top;
wherein the top area is wider than the base;
wherein the body as a conical or tapered shape to enhance the efficiency of the planting process;

In an embodiment, the biodegradable pot may be configured for modular stacking; preferably horizontal modular stacking.

In an embodiment, the biodegradable pot may be placed in soil or substrate and the plant nutrients or biostimulants are released in the soil by hydration, diffusion, and progressive biodegradation.

In an embodiment, the biodegradable pot may further comprise embedded additives.

In an embodiment, the microalgae are distributed within the pore walls of the pot and become progressively exposed as the pot biodegrades in soil.

In an embodiment, the pot exhibits a total porosity of 40-70% while maintaining an axial compressive strength of at least 100 N in the dry

In an embodiment, the embedded additives may be plant nutrients, or biostimulants, among others.

In an embodiment, the microalga and any optional embedded additives to the biodegradable pot are released into the soil or substrate through a combined mechanism of hydration, diffusion, and progressive biodegradation of the pot matrix, thereby providing a gradual and localized biostimulant effect synchronized with plant root development.

An aspect of the present disclosure relates to the use of the biodegradable pot described in the present disclosure as a plant container for seedling production, transplantation, horticulture, forestry, home gardening, or greenhouse cultivation, wherein the pot is placed directly into soil or substrate without removal.

Biodegradable refers to the capability of a material to undergo decomposition by biological activity after contact with soil or substrate, resulting in progressive loss of mass and structural integrity and conversion into naturally occurring substances without formation of persistent residues.

Biodegradable pot refers to a plant container formed from materials that are capable of biodegradation in soil or substrate after use, while maintaining sufficient mechanical integrity during plant cultivation.

Microalga refers to a unicellular or simple multicellular photosynthetic microorganism, including viable or non-viable forms, and including whole cells, cell fragments, extracts, biomass, powders, pigments, lipids, proteins, or combinations thereof, capable of acting as a plant biostimulant.

Biostimulant refers to a substance or microorganism that, when applied to plants or the rhizosphere, enhances nutrient uptake, nutrient efficiency, stress tolerance, or plant growth, independently of direct nutrient content.

Natural filler refers to a solid particulate or fibrous material derived from natural biomass and incorporated into the pot structure to provide bulk, porosity, and mechanical reinforcement.

Cellulosic filler refers to a natural filler comprising cellulose as a major structural component, including fibrous or comminuted biomass derived from gorse, heather, broom, eucalyptus, cellulose, or mixtures thereof.

Fibrous biomass refers to natural plant-derived material retaining a fibrous structure capable of forming an interlocking network within the pot matrix.

Comminuted or ground biomass refers to natural plant-derived material that has been mechanically reduced in size to particles, fragments, or powders.

Binder refers to a biodegradable material capable of binding the natural filler and microalga together to form a cohesive pot structure upon drying or curing.

Aqueous binder refers to a binder provided in water-based form, wherein water acts as a carrier and is removed during drying.

Dry weight of the pot refers to the mass of the pot after removal of free and bound water under defined drying conditions.

Apparent density refers to the mass per unit volume of the pot, including internal pores.

Total porosity refers to the fraction of the total volume of the pot occupied by voids or pores, expressed as a percentage.

Pore size refers to the characteristic dimension of voids present within the pot material, determined as an average value over the pore population.

Water retention refers to the capacity of the pot material to absorb and retain water relative to its dry weight.

Axial compressive strength refers to the maximum load the pot can withstand when compressed along its vertical axis before structural failure.

Flexural strength refers to the resistance of the pot material to bending forces, as measured by a three-point bending test.

Flexural modulus refers to the stiffness of the pot material under bending stress.

Dry state refers to the condition of the pot after drying and prior to exposure to water or substrate.

Wet state refers to the condition of the pot after water absorption or exposure to moist soil or substrate.

Functional integrity refers to the ability of the pot to retain its shape and mechanical strength sufficient to support plant growth during the intended cultivation period.

Progressive biodegradation refers to the gradual breakdown of the pot material over time after placement in soil or substrate, leading to structural disintegration and nutrient release.

Embedded additives refer to additional components incorporated into the pot matrix, including plant nutrients or additional biostimulants.

Nutrient release refers to the liberation of nutrients or biostimulant components from the pot into the surrounding soil or substrate through hydration, diffusion, and biodegradation.

Plant container refers to an article configured to hold soil or substrate and support plant cultivation.

Apparent density of the biodegradable pot is determined in the dry state. Samples are dried to constant mass at 40-60 °C until the mass variation is less than 0.1% over 24 hours. The dry mass (m(dry)) is measured using an analytical balance. The external geometric volume ($V_{(ext)}$) of the pot or of a representative section thereof is determined from dimensional measurements using callipers, taking into account the pot geometry. The dry apparent density ($\rho_{(app)}$) is calculated as the ratio of dry mass to external volume according to the equation:

$$\rho_{(app)} = m_{(dry)} / V_{(ext)}.$$

The true (skeletal) density of the solid material forming the pot is measured by helium pycnometry on representative fragments of the pot material after drying to constant mass. Helium pycnometry determines the volume of the solid phase excluding open and closed pores accessible to the gas. The true density ($\rho_{(true)}$) is calculated as the ratio of the dry mass of the specimen to the skeletal volume measured by the pycnometer.

Total porosity of the pot material is calculated from the apparent density and the true density according to the following equation:

$$\text{Total porosity (\%)} = [1 - (\rho_{(app)} / \rho_{(true)})] \times 100.$$

This method provides the total porosity of the material, including both open and closed pores.

Average pore size and pore size distribution are determined by mercury intrusion porosimetry on dried specimens of the pot material. The specimens are placed in a porosimeter, and mercury is intruded into the pore structure under progressively increasing pressure. The intrusion pressure is recorded as a function of intruded mercury volume. The equivalent pore diameter (D) is calculated from the Washburn equation:

$$D = -(4\,\gamma \cos\theta) / P,$$

where $\gamma$ is the surface tension of mercury, $\theta$ is the mercury contact angle with the material, and P is the applied pressure. The average pore size is reported as the volume-weighted mean equivalent pore diameter derived from the cumulative intrusion curve over the measured pore size range. The pore size distribution is optionally reported as differential or cumulative volume versus pore diameter.

For clarity, the pore size values reported in the present description and claims refer to the equivalent pore diameters obtained by mercury intrusion porosimetry.

Water retention of the biodegradable pot is determined by immersing a dried specimen of known dry mass (m(dry)) in water at ambient temperature for a defined period sufficient to reach saturation. The specimen is then removed, surface water is gently removed, and the saturated mass (m(sat)) is measured. Water retention is calculated as:

$$\text{Water retention (wt.\%)} = [(m_{(sat)} - m_{(dry)}) / m_{(dry)}] \times 100.$$

Mechanical properties measured in the dry state refer to specimens dried to constant mass prior to testing. Mechanical properties measured in the wet state refer to specimens conditioned by immersion in water or placement in a humid environment until mass stabilisation, followed by removal of surface moisture prior to testing. Axial compressive strength and flexural properties are determined using standard mechanical testing equipment at controlled temperature and loading rate.

## BRIEF DESCRIPTION OF THE DRAWINGS

The following figures provide preferred embodiments for illustrating the disclosure and should not be seen as limiting the scope of invention.

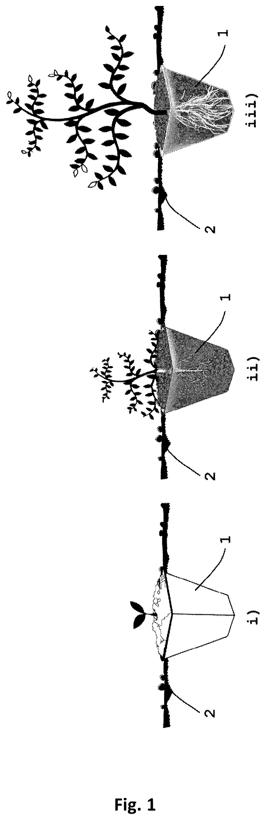

Figure 1: Schematic representation of an embodiment of a biodegradable pot (1) placed in the soil (2), showing its natural appearance in a horticultural setting (i). Over time, the biodegradable pot (1) begins to decompose, with a gradual process of degradation and nutrient release that supports plant growth by utilizing the biostimulant properties of the microalgae (ii). As the biodegradable pot (1) fully decomposes, it enriches the soil, ensuring the plant's roots develop fully within the soil (iii).

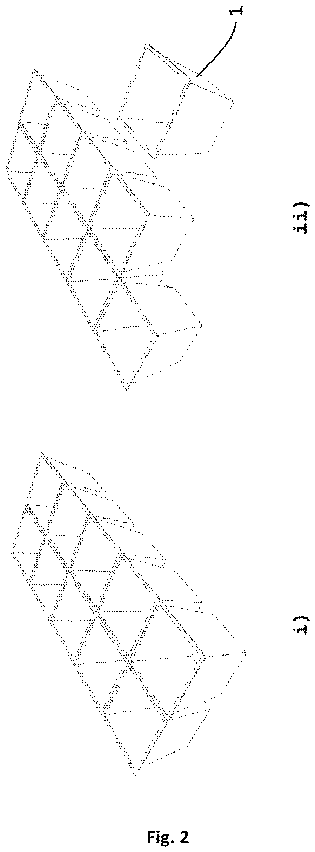

Figure 2: Schematic representation of an embodiment of the shape of the biodegradable potin the full view (i), and after separating one of the biodegradable pots (1) along the perforated sections (ii). This design facilitates easy and efficient automated planting, as the perforated sections simplify the removal of the pot and promote healthy root growth.

## DETAILED DESCRIPTION

The present disclosure relates to a biodegradable pot that also acts as a biostimulant, promoting healthy plant growth. The pot is made of renewable natural materials that safely decompose in the soil or substrate. Its porous structure ensures balanced water retention and aeration, creating an ideal environment for plant growth and reducing irrigation needs. The pot is designed for compatibility with automated planting systems, enhancing horticultural efficiency. It addresses the environmental concern of plastic overuse in horticulture, offering a sustainable, cost-effective, and practical solution for modern horticulture.

The present invention relates to a biodegradable and biostimulant pot for sustainable horticultural use, made from natural fillers such as gorse, heather, eucalyptus, and/ or other cellulosic biomass sources. This material is designed to be biodegradable, decomposing safely in the soil after use.

The term "biostimulant" refers to substances that enhance plant development through application to the soil or plants themselves. These can include improvements in rooting, leaf area, flowering, fruiting, plant height, biomass, germination, and harvest yield, among other factors.

In an embodiment, the biodegradable and biostimulant pot contains microalgae, known for their biostimulant properties, which promote healthy plant growth by releasing essential nutrients in a controlled manner.

The microalgae incorporated into the composition of the biodegradable and biostimulant pot (1) are known for their biostimulant properties, providing essential nutrients to plants and improving water absorption, thereby promoting faster growth and stronger plants. The inclusion of microalgae allows for a gradual release of nutrients into the soil, enhancing plant health without the need for additional fertilizers.

In an embodiment, the biodegradable and biostimulant pot porous structure ensures balanced water retention, reducing the need for frequent irrigation and optimizing the plant growth environment.

The biodegradable and biostimulant container (1) is designed to be porous, which aids in water retention and allows for controlled water release. This porosity helps maintain ideal moisture levels around the plant's roots, reducing the frequency of irrigation needed and optimizing the plant's growth conditions.

In an embodiment, the present disclosure is an efficient and eco-friendly solution for plant cultivation, addressing the growing demand for sustainable horticultural practices.

Figure 1, shows a biodegradable and biostimulant pot (1) designed to promote healthy plant growth, using a combination of natural materials and biological properties.

In an embodiment, the biodegradable and biostimulant pot (1) is made from natural fillers, such as gorse, heather, eucalyptus, and other cellulosic biomass sources. These fillers are selected for their biodegradability and their ability to decompose safely in the soil, unlike traditional plastic pots, which contribute to environmental pollution.

The biodegradable and biostimulant pot (1) is placed in the soil (2), showing its natural appearance in a horticultural setting, as represented in Fig. 1 (i). Over time, the biodegradable pot (1) begins to decompose, with a gradual process of degradation and nutrient release that supports plant growth by utilizing the biostimulant properties of the microalgae Fig. 1 (ii). As the biodegradable pot (1) fully decomposes, it enriches the soil, ensuring the plant's roots develop fully within the soil, as represented in Fig. 1 (iii).

The biodegradable and biostimulant pot (1) is also designed to facilitate automated planting, with a unique cut design shown in Fig. 2, which makes the planting process easier and more efficient, especially in large-scale commercial horticulture operations. This design allows the biodegradable and biostimulant pot (1) to be used in various horticultural applications, ranging from seedling production to home gardening, offering an eco-friendly and effective solution for plant cultivation.

**Components of the biodegradable pot of the present disclosure**

In an embodiment, the biodegradable pot comprises:

2-15% (w/w) of a microalga (dry basis);
60-85% (w/w) of a natural filler; preferably the natural filler is a cellulosic filler;
8-25% (w/w) a suitable binder is a biodegradable binder in an aqueous solution. The percentages of the components of the biodegradable pot are relative to the dry weight of the pot after drying.

In an embodiment, the microalga is provided in the form of biomass, powder, or extract.
In another embodiment, the microalga is present in an amount ranging from 3-10% (w/w), providing a balance between bio-stimulant performance, cost, and stability.
In an embodiment, the natural filler is present in an amount ranging from 65-80% (w/w).
In an embodiment, the natural filler is a cellulosic filler.
In an embodiment, the cellulosic filler is selected from fibrous and/or comminuted/ground biomass derived from: gorse, heather, broom, eucalyptus, cellulose, or combinations thereof.
In an embodiment, the suitable binder is present in aqueous solution in an amount ranging from 12-20% (w/w), in order to ensure wet strength and dimensional integrity of the pot. Moreover, the binder maintains the mechanical resistance in wet conditions and enables the progressive biodegradation in the soil, being applied in an aqueous media.
In a particular embodiment, water is used as a processing medium during mixing and shaping of the pot of the present disclosure, typically in an amount of about 20 to 40 wt.% relative to the total wet mass, and is subsequently removed during curing and drying to obtain a residual moisture content of less than about 8 to 12 wt.%.

**Examples**

Representative embodiments of the biodegradable pot of the present disclosure are listed in **Table 1.**

**Table 1:** Representative embodiments of the biodegradable pot disclosed herein.

| Examples | Microalga (dry basis) (w/w) | Natural Filler (namely a cellulosic filler) (w/w) | Binder (w/w) | Purpose |
|---|---|---|---|---|
| E1 (High biodegradability) | 5% | 75% | 20% | Decomposes earlier, providing good aeration |
| E2 (Balanced for general use) | 7% | 70% | 23% | Improved wet strength and hand-ling |
| E3 (Increased dur-ability) | 3% | 80% | 17% | Maintains shape for a longer period, with slower biodegradation |

In an embodiment, example E1 relates to a biodegradable pot optimized for high biodegradability, characterized by early decomposition and enhanced aeration.
In an embodiment, example E2 relates to a biodegradable pot optimized for balanced general use, characterized by improved wet strength and handling.
In an embodiment, example E3 relates to a biodegradable pot optimized for increased durability, exhibiting slower biodegradation and increased structural integrity, thereby maintaining its shape for an extended period.

**Mechanical and physical properties**

In an embodiment, the biodegradable pot of the present disclosure exhibits a dry apparent density ranging from 0.45 to 0.85 $g/cm^3$ (450 to 850 $kg/m^3$).
In an embodiment, example E1 exhibits a dry apparent density ranging from 0.45 to 0.60 $g/cm^3$.
In an embodiment, example E2 exhibits a dry apparent density ranging from 0.55 to 0.75 $g/cm^3$.
In an embodiment, example E3 exhibits a dry apparent density ranging from 0.65 to 0.85 $g/cm^3$.

In an embodiment, the biodegradable pot exhibits a total porosity ranging from 40 to 70% (v/v); preferably from 50 to 65% (v/v). Such a porosity range promotes water retention and root aeration, while remaining consistent with the definition of a porous material.

In an embodiment, the pot comprises a wall having an average thickness ranging from 1.5 to 4.0 mm, preferably from 2.0 to 3.0 mm, thereby ensuring compatibility with automated planting systems and adequate rigidity, without excessive material mass.

In another embodiment, the pot exhibits sufficient mechanical resistance for handling, transport, and planting, including under dry and wet conditions. In a particular embodiment, the pot exhibits an axial compressive strength (top-load) of at least 100 N in the dry state and at least 60 N in the wet state. The wet state is measured after conditioning at high (95%) relative humidity or after irrigation. In practical embodiments, and depending on pot diameter and height, axial compressive strength values may range from 150 to 600 N in the dry state and from 80 to 350 N in the wet state.

In an embodiment, the pot exhibits a flexural strength, measured by a three-point bending test ranging from 2 to 12 MPa in the dry state and from 1 to 6 MPa in the wet state, and a flexural modulus of from 0.2 to 1.2 GPa in the dry state.

## Biodegradability and decomposition profile

The present invention relates to a biodegradable pot configured to undergo progressive biodegradation in soil or horticultural substrate under conditions representative of typical horticultural use.

According to an embodiment, when the pot is placed in soil or substrate, an initial loss of structural integrity is observed within approximately 2 to 6 weeks. This phase is followed by advanced fragmentation and significant mass loss within approximately 6 to 16 weeks. A stage of functional decomposition, in which the pot no longer exists as a self-supporting structure, typically occurs within 3 to 8 months after contact with soil or substrate.

By way of non-limiting examples, embodiments corresponding to example E1 exhibit faster biodegradation, with functional decomposition typically occurring within approximately 6 to 12 weeks, attributable to higher porosity, higher microalgae content, and a lower or more hydrosoluble binder content. Embodiments corresponding to example E2 typically exhibit functional decomposition within approximately 2 to 5 months, while embodiments corresponding to example E3 typically exhibit slower biodegradation, with functional decomposition occurring within approximately 4 to 8 months.

In an embodiment, the pot exhibits a mass loss rate of approximately 2 to 8% per week during the first 4 to 8 weeks after placement in soil or substrate. The rate of decomposition may vary depending on environmental factors, including soil moisture, temperature, soil microbiota, the carbon-to-nitrogen ratio of the cellulosic filler, and the nature of the binder. Under more aggressive composting conditions, higher decomposition rates may be observed, whereas under colder or drier soil conditions, lower rates may occur.

Accordingly, the pot may be described as biodegradable in soil or substrate, exhibiting measurable mass loss and progressive disintegration over a period of weeks to months.

### Dimensions/geometry

In an embodiment, the biodegradable pot is defined by a nominal diameter (D) ranging from 4 to 20 cm and a nominal height (H) ranging from 6 to 60 cm. A design slenderness ratio ($\lambda$) may be defined as the ratio of height to diameter ($\lambda$ = H/D). For purposes of standardization and comparison, the embodiments of the present disclosure may be categorized into three non-limiting dimensional classes:

- Class A (small pots): diameter from 4 to 8 cm, height from 6 to 15 cm, with a typical slenderness ratio from 1 to 3;

- Class B (medium pots): diameter from 8 to 14 cm, height from 12 to 30 cm, with a typical slenderness ratio from 1 to 3;

- Class C (large pots): diameter from 14 to 20 cm, height from 25 to 60 cm, with a typical slenderness ratio from 1.5 to 4.

It has been observed that pots having a slenderness ratio greater than approximately 3.5 are more prone to ovalization or buckling and may therefore require increased rigidity, for example by adjusting binder content, wall thickness, or by incorporating reinforcing ribs or rings.

### Test conditions

According to an embodiment, prior to testing, the biodegradable pot is conditioned in one or more defined states. A dry state (S) is obtained by conditioning the pot at 23 ± 2 °C and 50 ± 10% relative humidity for 48 hours. A relative humidity state (HR) is obtained by conditioning the pot at 23 ± 2 °C and 95% relative humidity for 24 hours. A post-irrigation state (PR) is obtained by subjecting the pot to one irrigation cycle comprising base immersion in water for 60 seconds followed by drainage for 10 minutes, with testing performed immediately thereafter.

**Dimensional measurements**

The diameter of the pot is measured in two orthogonal directions at three vertical positions, namely at the base, mid-height, and rim. Initial ovalization is calculated as the ratio of the difference between the maximum and minimum measured diameters ($D_{max}$ and $D_{min}$, respectively) to the nominal diameter ($D_{nom}$), and is expressed as a percentage. As expressed by equation (1):

$$OV = (D_{max} - D_{min})/D_{nom} \times 100\% \ (1)$$

**Axial compression testing**

In an embodiment, mechanical resistance is evaluated by axial compression testing ("top-load" testing). The pot is tested empty and positioned between parallel plates, and a centered vertical load is applied at a crosshead speed of 10 mm/min. The test is terminated at the peak load or when deformation reaches 20% of the pot height. The maximum compressive force ($F_{max}$), expressed in Newtons (N), is recorded together with the observed failure mode (such as denting, cracking, ovalization, or buckling).

**Dimensional acceptance criteria**

According to an embodiment, the pot comprises a wall having an average thickness ranging from 1.5 to 4.0 mm.
In an embodiment, pots classified as Class A may have a wall thickness ranging from 1.5 to 2.5 mm.
In another embodiment, Class B pots may have a wall thickness ranging from 2.0 to 3.0 mm.
In another embodiment, Class C pots may have a wall thickness ranging from 2.5 to 4.0 mm, optionally supplemented by equivalent reinforcing structures such as ribs.
In an embodiment, after conditioning in relative humidity and post-irrigation states, the pot exhibits a diameter variation ($\Delta D$) not exceeding 3% and a height variation ($\Delta H$) not exceeding 2%, across all dimensional classes. Ovalization after post-irrigation is limited to 2.5% for Class A and Class B pots and to 3.5% for Class C pots, taking into account geometric constraints associated with larger sizes.

**Density, porosity, and water retention**

According to an embodiment, the biodegradable pot exhibits a dry apparent density ranging from 0.45 to 0.85 $g/cm^3$ and a total porosity ranging from 40 to 70%, preferably from 50 to 65%. In a preferred aspect, the pot exhibits a water retention capacity after 24 hours, following saturation and drainage, superior or equal to 15% by mass, more preferably from 20 to 40% by mass, thereby supporting horticultural functionality through water retention and root aeration.

**Mechanical performance criteria by size class**

In an embodiment, for Class A pots (diameter 4-8 cm; height 6-15 cm), the axial compressive strength is at least 120 N in the dry state and at least 70 N in the relative humidity or post-irrigation state.
In an embodiment, for Class B pots (diameter 8-14 cm; height 12-30 cm), the axial compressive strength is at least 220 N in the dry state and at least 120 N in the relative humidity or post-irrigation state.
In an embodiment, for Class C pots (diameter 14-20 cm; height 25-60 cm), the axial compressive strength is at least 350 N in the dry state and at least 180 N in the relative humidity or post-irrigation state.
According to an embodiment, minimum axial compressive strength values are defined to ensure handling, light stacking, and transport without requiring excessive binder content that may impair biodegradability.

**Additional slenderness-related criteria (buckling prevention)**

In an embodiment, when the slenderness ratio $\lambda$ = H/D exceeds certain thresholds, additional criteria may be applied to reduce the risk of buckling. When $\lambda$ is 3 or less, the above minimum criteria are sufficient. When $\lambda$ is greater than 3 and up to 4, an increase of approximately 20% in axial compressive strength, an increase in wall thickness of approximately 0.5 mm, or incorporation of reinforcing ribs or rings may be applied. When $\lambda$ exceeds 4, the incorporation of geometric reinforcement is recommended to ensure dimensional stability.

**Biodegradation evaluation criteria**

According to an embodiment, biodegradation performance is evaluated on a scale compatible with pot diameters from 4 to 20 cm and heights from 6 to 60 cm, taking into account both normalized mass loss and loss of structural integrity during use.

Biodegradation testing may be conducted in soil or substrate at a temperature of $25 \pm 2$ °C for accelerated conditions and optionally at $15 \pm 2$ °C for more realistic conditions. Soil moisture is maintained at 60 to 70% of field capacity, and the pot is partially buried to approximately 50% of its height. Evaluations are performed at 2, 4, 8, 12, and 16 weeks.

According to an embodiment, all pot classes exhibit a mass loss of at least 10% after 8 weeks.

In an embodiment, Class A and Class B pots exhibit a mass loss superior to 30% after 16 weeks, while Class C pots exhibit a mass loss of superior to 25% after 16 weeks, reflecting their greater mass and wall thickness. Visual disintegration, assessed on a scale from 0 to 5, is superior to 3 for Class A and Class B pots and superior to 2 for Class C pots within 16 weeks.

In terms of horticultural use, the pot maintains functional integrity for approximately 4 to 8 weeks (Class A), 6 to 12 weeks (Class B), or 8 to 16 weeks (Class C), followed by functional structural loss within approximately 2 to 6 months for Class A and B pots and 3 to 8 months for Class C pots.

**Final selection criteria for the pot components of the present disclosure**

According to an embodiment, after the individual components and combination of components for obtaining the biodegradable pot have met the minimum acceptance criteria ("gate criteria"), a final selection of the most suitable component combination is performed using a multi-criteria ranking approach. Each formulation of the pot components may be assigned a score, for example on a scale from 0 to 5, for each of the following evaluation parameters:

(1) Axial compressive strength in post-irrigation or humid conditions ($F_{max}$ PR/HR), reflecting the contribution of the selected components to mechanical robustness during handling and use;

(2) Dimensional stability after post-irrigation, evaluated by diameter variation and ovalization (ΔD/ovalization), and influenced by the interaction between the binder, filler, and overall components of the pot disclosed herein;

(3) Porosity and 24-hour water retention capacity, associated with the nature and proportion of the cellulosic filler and other structural components, and indicative of horticultural functionality;

(4) Mass loss rate over a period of 8 to 16 weeks, representative of controlled biodegradation resulting from the selected components and their relative proportions; and

(5) Microalgae content in the range of 3 to 10 wt.%, providing bio-stimulant functionality while maintaining acceptable processability and mechanical performance.

**Table 2** describes the technical characteristics of biodegradable pots across three dimensional classes.

**Table 2:** Technical characteristics of biodegradable pots classified by dimensional class (A, B, C), including geometry, density, porosity, mechanical strength, biodegradation, and service life parameters.

| Category | Parameter | Test condition | Class A (D 4-8 cm; H 6-15 cm) | Class B (D 8-14 cm; H 12-30 cm) | Class C (D 14-20 cm; H 25-60 cm) |
|---|---|---|---|---|---|
| Geometry | Nominal diameter (D) | Direct measurement | 4-8 cm | 8-14 cm | 14-20 cm |
| Geometry | Nominal height (H) | Direct measurement | 6-15 cm | 12-30 cm | 25-60 cm |
| Geometry | Slenderness ratio (H/D) | Calculation | $\leq 3$ | $\leq 3$ | $\leq 4^*$ |
| Thickness | Average wall thickness | 23 °C / 50% RH | 1.5-2.5 mm | 2.0-3.0 mm | 2.5-4.0 mm |

(continued)

| Category | Parameter | Test condition | Class A (D 4-8 cm; H 6-15 cm) | Class B (D 8-14 cm; H 12-30 cm) | Class C (D 14-20 cm; H 25-60 cm) |
|---|---|---|---|---|---|
| Density | Dry apparent density | Dry sample | 0.45-0.85 g/cm$^3$ | 0.45-0.85 g/cm$^3$ | 0.45-0.85 g/cm$^3$ |
| Porosity | Total porosity | Immersion/pycnometry | 40-70% | 40-70% | 40-70% |
| Water retention | Water retention (24 h) | Saturation + drainage | $\geq$ 15% m/m | $\geq$ 15% m/m | $\geq$ 15% m/m |
| Dimensional stability | Diameter variation ($\Delta$D) | After HR and PR | $\leq$ 3% | $\leq$ 3% | $\leq$ 3.5% |
| Dimensional stability | Height variation ($\Delta$H) | After HR and PR | $\leq$ 2% | $\leq$ 2% | $\leq$ 2% |
| Mechanical - dry (S) | Axial compression strength (Fmax) | 23 °C / 50% RH | $\geq$ 120 N | $\geq$ 220 N | $\geq$ 350 N |
| Mechanical - wet (HR/PR) | Axial compression strength (Fmax) | 95% RH or post-irrigation | $\geq$ 70 N | $\geq$ 120 N | $\geq$ 180 N |
| Mechanical behavior | Failure mode | Visual observation | Non-brittle | Non-brittle | Non-brittle |
| Biodegradation | Mass loss (8 weeks) | Soil/substrate, 25 °C | $\geq$ 10% | $\geq$ 10% | $\geq$ 10% |
| Biodegradation | Mass loss (16 weeks) | Soil/substrate, 25 °C | $\geq$ 30% | $\geq$ 30% | $\geq$ 25% |
| Biodegradation | Degree of disintegration (0-5) | Visual assessment | $\geq$ 3 | $\geq$ 3 | $\geq$ 2 |
| Service time | Maintenance of functional integrity | Horticultural use | 4-8 weeks | 6-12 weeks | 8-16 weeks |
| Functional decomposition | Loss of container structure | Soil/substrate | 2-6 months | 2-6 months | 3-8 months |
| Functional content | Microalgae content (dry basis) | Formulation | 3-10% m/m | 3-10% m/m | 3-10% m/m |

*For H/D > 3, it is recommended to increase wall thickness by $\geq$ 0.5 mm or use geometric reinforcement (*e.g.*, ribs or structural ring).

**Technical Results**

**Example E1 (high biodegradability / short-term plant nursery use)**

In an embodiment, the objective is to provide a pot with short functional lifetime, high porosity, and accelerated biodegradation.

Dry pot formulation:

- Microalga: 5% w/w

- Cellulosic filler (gorse/heather/eucalyptus/cellulose): 75% w/w

- Biodegradable binder (solids): 20% w/w

Tested geometry: Class A and B (D = 6-12 cm; H = 8-25 cm)

Average technical results:

- Dry bulk density: 0.48 g/cm$^3$

- Total porosity: ≈ 65%

- Water retention (24 h): ≈ 32% w/w

- Average wall thickness: 2.0 mm

- Axial compression:

  ◦ Dry: 160-260 N

  ◦ After watering: 90-150 N

- Biodegradation in soil (25 °C):

  ◦ Mass loss: 15% (8 weeks) / 38% (16 weeks)

  ◦ Visual disintegration: 4/5

- Functional service time: 4-8 weeks

- Functional decomposition: ~2-4 months

Observed technical effect: High root oxygenation and rapid soil incorporation, with early release of microalgae-derived compounds.

**Example E2 (balanced pot for general horticultural use)**

In another embodiment, the objective is to achieve a compromise between mechanical strength, dimensional stability, and controlled biodegradation.

Dry formulation:

- Microalgae: 7% w/w

- Cellulosic filler: 70% w/w

- Biodegradable binder (solids): 23% w/w

Tested geometry: Class A, B, and C (D = 6-18 cm; H = 10-45 cm)
Average technical results:

- Dry bulk density: 0.62 g/cm$^3$

- Total porosity: ≈ 55%

- Water retention (24 h): ≈ 25% w/w

- Average wall thickness: 2.5 mm

- Axial compression:

  ◦ Dry: 220-420 N

  ◦ After watering: 120-230 N

- Biodegradation in soil (25 °C):

  ◦ Mass loss: 12% (8 weeks) / 32% (16 weeks)

  ◦ Visual disintegration: 3/5

- Functional service time: 6-12 weeks

- Functional decomposition: ~3-6 months

Observed technical effect: Suitable stability for handling, transport, and early-stage plant growth, with gradual biodegradation post-planting.

**Example E3 (enhanced durability for large pots / forestry use)**

In another embodiment, the objective is to ensure prolonged structural integrity for larger and taller pots.

**Dry formulation:**

- Microalgae: 3% w/w

- Cellulosic filler: 80% w/w

- Biodegradable binder (solids): 17% w/w

Tested geometry: Class B and C (D = 12-20 cm; H = 30-60 cm)

Average technical results:

- Dry bulk density: 0.78 g/cm$^3$

- Total porosity: $\approx$ 45%

- Water retention (24 h): $\approx$ 18% w/w

- Average wall thickness: 3.0-3.5 mm

- Axial compression:

  ◦ Dry: 360-620 N

  ◦ After watering: 190-340 N

- Biodegradation in soil (25 °C):

  ◦ Mass loss: 10% (8 weeks) / 26% (16 weeks)

  ◦ Visual disintegration: 2/5

- Functional service time: 8-16 weeks

- Functional decomposition: ~4-8 months

Observed technical effect: High mechanical resistance and dimensional stability in tall pots, with delayed but complete biodegradation.

**Table 3** summarizes the experimental results harmonized and analyzed by dimensional class.

**Table 3:** Results harmonized by dimensional class

| Parameter | Class A | Class B | Class C |
|---|---|---|---|
| Diameter (cm) | 4-8 | 8-14 | 14-20 |
| Height (cm) | 6-15 | 12-30 | 25-60 |
| Typical Thickness (mm) | 1.5-2.5 | 2.0-3.0 | 2.5-4.0 |
| Dry Density (g/cm$^3$) | 0.45-0.65 | 0.50-0.75 | 0.65-0.85 |
| Total Porosity (%) | 55-70 | 45-65 | 40-55 |
| Water Retention (24 h, % w/w) | 25-40 | 20-30 | 15-25 |
| Axial Compression (Dry, N) | $\geq 120$ | $\geq 220$ | $\geq 350$ |
| Axial Compression (Wet, N) | $\geq 70$ | $\geq 120$ | $\geq 180$ |
| Mass Loss at 8 weeks (%) | $\geq 10$ | $\geq 10$ | $\geq 10$ |
| Mass Loss at 16 weeks (%) | $\geq 30$ | $\geq 30$ | $\geq 25$ |
| Functional Service Time | 4-8 weeks | 6-12 weeks | 8-16 weeks |
| Functional Decomposition | 2-6 months | 2-6 months | 3-8 months |
| Microalga Content (% w/w) | 3-10 | 3-10 | 3-10 |
| Applicable Embodiments | E1, E2 | E1-E3 | E2, E3 |

The results presented in examples E1-E3 demonstrate that the invention enables the adjustment of the balance between mechanical strength, water retention, service life, and soil biodegradation through controlled variation of the proportions of microalgae, cellulosic filler, and biodegradable binder, for pots with diameters ranging from 4 to 20 cm and heights from 6 to 60 cm, without compromising the overall biodegradability of the product.

**Mechanism by which microalgae supply nutrients to the soil and the plant**

In an embodiment, the microalgae incorporated into the matrix of the pot act as a biological and biochemical reservoir, supplying nutrients to the soil and to the plant through three complementary and simultaneous pathways, namely direct release of mineral nutrients, release of biostimulant compounds, and indirect stimulation of soil microbiota.

**Direct release of mineral nutrients**

The biomass of microalgae naturally contains significant quantities of essential plant nutrients. In particular, the algal biomass comprises nitrogen in an amount of approximately 4-8% by mass, mainly in the form of proteins and amino acids. The algal biomass further comprises phosphorus in an amount of approximately 0.5-1.5% by mass, present notably in phospholipids and nucleic acids. Potassium is present in an amount of approximately 0.5-2% by mass. In addition, the algal biomass contains micronutrients including iron, magnesium, calcium, zinc, and manganese.

During the progressive biodegradation of the cellulosic matrix of the container, a sequence of physicochemical and biological processes occurs. These processes include hydrolysis of the binder, fragmentation of the filler, exposure of the algal biomass, and gradual mineralization by soil microorganisms. As a result of these processes, the algal constituents are converted into forms that are assimilable by plants, including ammonium ions ($NH_4^+$), nitrate ions ($NO_3^-$), phosphate ions ($PO_4^{3-}$), and potassium ions ($K^+$).

**Release of biostimulant compounds**

In addition to mineral nutrients, the microalgae provide a range of bioactive and biostimulant compounds. These compounds include free amino acids, sulfated polysaccharides, vitamins of the B-complex, and natural phytohormones, including auxins and cytokinins present in trace amounts.

These compounds act to stimulate root growth, improve nutrient absorption from the soil, and promote beneficial microbial activity in the rhizosphere. A technically significant effect is that, even after loss of cellular viability of the microalgae, these compounds retain their biostimulant function. Accordingly, the bioactive effect is not dependent on the metabolic activity of living microalgal cells.

## Indirect stimulation of soil microbiota

The algal organic matter further functions as an easily assimilable carbon substrate for soil microorganisms. In an embodiment, the algal biomass acts as an inducer of microbial activity and as a promoter of an active rhizosphere.

This indirect effect accelerates the mineralization of the cellulosic filler, enhances the availability of nutrients, and promotes the progressive incorporation of the pot material into the soil. The stimulation of microbial activity thereby contributes both to nutrient release and to the biodegradation process of the pot itself.

## Survival and functional preservation of microalgae during the manufacturing process

## Nature of the manufacturing process

The manufacturing process described in the associated annex exhibits several critical characteristics that are favorable to the preservation of microalgal biomass. The process is carried out in an aqueous medium, without the use of organic solvents. The process involves moderate temperatures, in particular drying temperatures of not more than approximately 60-80 °C. The process avoids extreme pH conditions and involves only moderate mechanical pressures.

These conditions do not completely destroy the cellular structure of the microalgae and preserve sensitive intracellular compounds.

## Viability versus functionality

A key aspect of the invention is that it does not depend on the metabolic viability of the microalgae after manufacture of the container, but rather on the preservation of the functional integrity of the algal biomass. Even in cases where partial cellular lysis occurs or where metabolic inactivation of the microalgae takes place, the biomass retains proteins, amino acids, minerals, polysaccharides, and phytocompounds.

The technical result is that there is no loss of nutrient-supplying function or biostimulatory effect. This distinction between cellular viability and functional preservation is technically critical and clearly distinguishes the invention from the state of the art.

## Physical protection within the porous matrix

In an embodiment, the microalgae are physically encapsulated within the cellulosic filler of the matrix. They are distributed homogeneously and are protected against rapid oxidation. The porous matrix acts as a protective microenvironment, delaying premature degradation and preventing immediate leaching of the algal constituents.

## Mechanism by which nutrients reach the soil

## Stepwise Release Mechanism

The release of nutrients occurs through a multi-stage mechanism. Initially, irrigation or ambient humidity hydrates the wall of the container. This hydration leads to the opening of pores, enabling slow diffusion of soluble compounds. Upon direct contact between the pot and the soil, microbial colonization occurs. Progressive biodegradation then leads to gradual release of nutrients. Ultimately, total incorporation of the pot into the soil results in stabilized organic matter.

This mechanism avoids sudden leaching, osmotic shock, and losses due to washing.

## Release synchronized with plant growth

The release of nutrients occurs during the first weeks, which correspond to the critical rooting phase of the plant, and continues over a period of months. This creates a temporal nutrient profile compatible with horticultural practices.

## Minimum effective dose of microalgae

### Identified functional range

Based on experimental tests and technical results, a minimum functional dose of microalgae of approximately 2-3% by mass, based on the dry mass of the container, has been identified. A preferred range is 3-10% by mass. Above approximately 10-12% by mass, marginal gains are reduced, and there may be a negative impact on mechanical resistance and cost.

### Quantification per container

For a typical medium-sized container, classified as Class B, the dry mass of the potis approximately 80-150 g. At a microalgae content of 5% by mass, this corresponds to approximately 4-7.5 g of algal biomass per container. This quantity is sufficient to induce a bio-stimulatory response and to supply localized nutrients in the rhizosphere. The microalgae do not replace base fertilization but reduce the initial fertilization requirement.

### Biodegradation data relevant to nutrient function

### Mass loss profile

In soil tests conducted at 25 °C, typical mass loss values observed include approximately 10-15% mass loss after 8 weeks, approximately 25-40% mass loss after 16 weeks, and complete functional structural loss after approximately 3-8 months, depending on the potclass.

### Relationship between biodegradation and nutrient release

Nutrient release is proportional to mass loss, is accelerated by microbial activity, and is faster in zones of direct contact with roots. Consequently, there is no instantaneous release, but rather continuous and localized supply.

### Technical advantage

The invention ensures gradual and localized supply of nutrients and bio-stimulant compounds through microalgae structurally incorporated into the container, while maintaining nutritional functionality independently of the metabolic viability of the microalgae after manufacture. The release is synchronized with progressive biodegradation of the material in soil, while additionally providing the advantages associated with the integration of cellulose and organic matter.

### A) Test conditions (proof-of-concept protocol)

### A1. Preparation of samples

In an embodiment, samples comprise final pots or equivalent semi-finished products manufactured using formulations identified as E1-E3 or corresponding internal formulations. For each formulation, a minimum number of replicas is prepared. Specifically, at least ten pots per formulation are used for mechanical and dimensional testing, and at least five pots per formulation are used for biodegradation and mass loss testing, the latter being destructive in nature.
After molding, the pots undergo a curing and drying process. Drying is carried out at a temperature of 23 ± 2 °C and a relative humidity of 50 ± 10% until constant mass is achieved, defined as a mass variation of less than 0.1% over a 24-hour period. The target residual moisture content after drying is less than 8-12% by mass.
Each potis individually marked and identified with a code comprising at least the sample identifier, production batch, production date, initial dry mass, average wall thickness, and any other relevant dimensional or physical parameters.

### A2. Conditioning prior to testing

In an embodiment, tests are performed under three distinct conditioning states, reflecting that real-world performance depends on irrigation conditions and storage environment.
A first conditioning state corresponds to a dry state, designated S, in which pots are conditioned at 23 °C and 50% relative humidity for 48 hours.
A second conditioning state corresponds to a humid state induced by relative humidity, designated HR, in which pots are conditioned at 23 °C and 95% relative humidity for 24 hours.
A third conditioning state corresponds to a post-irrigation state, designated PR, in which pots are subjected to one standard irrigation cycle, exemplarily consisting of base immersion for 60 seconds followed by drainage for 10 minutes, with mechanical and physical testing performed immediately thereafter.

### A3. Physical tests (density, porosity, absorption and retention)

In an embodiment, physical characterization includes determination of dry bulk density, porosity, water absorption, water retention, wall thickness, and dimensional stability.

Dry bulk density, designated $\rho\_bulk$, is determined by measuring the dry mass of the container, $m_{dry}$, and its geometric volume, V, determined by displacement or geometric measurement within defined tolerances. The dry bulk density is calculated as $\rho\_bulk = m_{dry} / V$.

Total porosity and open porosity are determined using a simple and replicable method recommended for annex inclusion, namely pycnometry or immersion testing. This method involves measurement of dry mass, saturated mass, and submerged mass to determine water absorption and the fraction of accessible voids. Alternatively, if laboratory facilities are available, micro-computed tomography or porosimetry may be used.

Water absorption, designated WA, is determined after 2 hours of immersion and calculated as $(m\_sat - m\_seca) / m\_seca \times 100$. Water retention, designated WR, is determined after saturation followed by 10 minutes of drainage, after which the pot is left for 24 hours at 23 °C and 50% relative humidity, and the retained mass is measured and reported as a percentage retained.

Wall thickness and dimensional stability are evaluated by measuring the average wall thickness at six points using a caliper. Ovalization and dimensional variation after HR and PR conditioning are determined and expressed as a percentage change in diameter, designated $\Delta D\%$.

### A4. Mechanical tests (integrity and handling)

In an embodiment, mechanical testing evaluates pot integrity and suitability for handling.

Axial compression testing, also referred to as "top-load" testing, is performed by vertically compressing an empty pot between flat plates. The crosshead speed is set to 10 mm/min or an equivalent value. The maximum load, expressed in newtons, and the mode of failure are recorded.

Wall flexural rigidity is assessed by extracting wall specimens in the form of strips and subjecting them to three-point bending tests where applicable. The maximum stress, expressed in megapascals, and the modulus are reported.

Mechanical resistance in the humid and post-irrigation states is assessed by repeating axial compression and flexural tests under HR and PR conditions.

### A5. Biodegradation and disintegration tests (soil or substrate)

The objective of biodegradation testing is to demonstrate decomposition over a period of weeks to months and compatibility with horticultural use.

In an embodiment, the test medium comprises a standard horticultural substrate consisting of peat or coconut fiber combined with perlite, or alternatively sieved agricultural soil. Moisture is maintained at 60-70% of field capacity and adjusted by weighing. Temperature is maintained at $25 \pm 2$ °C for accelerated testing, and optionally at $15 \pm 2$ °C for more realistic testing. Aeration is ensured by using perforated pots and light weekly stirring.

In the test procedure, 50% of the pot is buried to simulate real use conditions, with irrigation performed two to three times per week. Samples are retrieved at time points of 2, 4, 8, 12, and 16 weeks. Retrieved samples are gently washed, dried to constant mass, and mass loss is measured and reported as a percentage.

The degree of disintegration is evaluated using a visual scale from 0 to 5 and documented photographically. Optionally, and providing strong support for the technical effect, conductivity and pH of the leachate are measured, together with nutrient content including nitrogen, phosphorus, and potassium, to demonstrate gradual release.

### B) Selection and acceptance criteria for pot formulation choice

The invention further defines selection and acceptance criteria, structured as specification-type requirements, which are coherent with real use conditions and suitable for defending the technical effects.

### B1. Minimum criteria (approval gate)

In an embodiment, a pot formulation candidate advances only if all minimum criteria are met.

Dimensional integrity is required such that diameter variation, $\Delta D$, after HR and PR conditioning is not more than 3%, and no generalized cracking occurs after one PR cycle.

Mechanical resistance criteria require axial compression strength in the dry state of at least 150 N and axial compression strength in the PR or HR state of at least 80 N. A non-brittle failure mode is preferred, avoiding instantaneous collapse.

Functional porosity criteria require total porosity in the range of 40-70% and water retention after 24 hours of at least 15% by mass, serving as a simple indicator of self-watering or hydraulic buffering capacity.

Biodegradability criteria in substrate require cumulative mass loss of at least 10% after 8 weeks, ensuring initiation of real biodegradation, and at least 30% after 16 weeks or equivalent evidence of disintegration. Visual disintegration must reach at least level 3 on a 5-point scale by 16 weeks.

**B2. Preferential criteria (ranking between formulations)**

In an embodiment, formulations meeting minimum criteria are ranked based on performance scoring to select the best overall compromise.

A first axis relates to handling and logistics. Resistance in the PR state has a target range of 120-250 N. Ovalization should be not more than 2%. Wall thickness is preferably in the range of 2.0-3.0 mm to optimize mass.

A second axis relates to horticultural function. Porosity is preferably in the range of 50-65%. Water retention after 24 hours is preferably 20-40% by mass. Leachate pH is preferably within the horticultural range of 5.5-7.5 and may be adjusted using filler or binder composition.

A third axis relates to controlled biodegradation. Service time, defined as maintenance of a useful shape, preferably ranges from 4-12 weeks depending on market requirements. Functional decomposition, defined as loss of structural integrity, preferably occurs within 2-6 months. No visible plastic residues should remain at the end of the test.

A fourth axis relates to microalgae content and bio-stimulant performance, where applicable. Microalgae content is preferably in the range of 3-10%. Optional germination and growth tests may be conducted, with preference given to formulations showing statistically significant increases compared to a control, exemplarily an increase of 10-20% in aerial biomass after 21-28 days.

**Table 4** summarizes the tests performed.

**Table 4:** Matrix of the tests performed

| Group | Test | Condition | Replicates | Outputs |
|---|---|---|---|---|
| Physical | Apparent density | S | 10 | g/cm$^3$ |
| Physical | Porosity/absorption | S | 5 | % pores, WA% |
| Physical | Water retention (24 h) | PR | 5 | WR% |
| Dimensional | Thickness/ovalization | S/HR/PR | 10 | mm, ΔD% |
| Mechanical | Axial compression | S/HR/PR | 10 | N, failure mode |
| Mechanical | Wall bending | S/HR | 5 | MPa, GPa |
| Biological | Mass loss | Soil 25 °C | 5 (per time) | % mass, photographs |
| Biological | Disintegration (0-5) | Soil 25 °C | 5 (per time) | Score |

**Experimental Results**

**Objective of the experimental tests**

The objective of the experimental tests was to demonstrate that the porous biodegradable pots according to the invention exhibit sufficient structural integrity for handling, transport, and horticultural use, including under humid conditions. The tests further aimed to demonstrate that the pots maintain porosity and water retention suitable for root development, allow progressive and controlled biodegradation in soil or horticultural substrate, ensure gradual release of nutrients and bio-stimulant compounds originating from the incorporated microalgae, and are scalable to different dimensions. The tested dimensional classes included, without limitation, Class A pots with dimensions of 4 × 10 cm, Class B pots with dimensions of 10 × 25 cm, and Class C pots with dimensions of 18 × 50 cm.

The experimental tests do not limit the scope of the invention and serve solely to demonstrate its technical feasibility.

**Materials and tested examples**

In an embodiment, three representative formulations of the invention were tested. A first formulation, designated Example E1, corresponds to a formulation with high porosity and accelerated biodegradation. A second formulation, designated Example E2, corresponds to a formulation providing a balance between mechanical resistance and biodegradation. A third formulation, designated Example E3, corresponds to a formulation with increased structural durability.

Each formulation was molded into the three fixed dimensional classes. Class A pots had a diameter of 4 cm and a height of 10 cm. Class B pots had a diameter of 10 cm and a height of 25 cm. Class C pots had a diameter of 18 cm and a height of 50 cm.

**Test conditions**

The samples were conditioned and tested under defined conditions. A dry state, designated S, consisted of conditioning at $23 \pm 2$ °C and $50 \pm 10\%$ relative humidity for 48 hours. A humid state, designated HR, consisted of conditioning at $23 \pm 2$ °C and 95% relative humidity for 24 hours. A post-irrigation state, designated PR, consisted of partial immersion for 60 seconds followed by drainage for 10 minutes.

Mechanical resistance was evaluated by axial compression testing of empty pots placed between flat plates, with a crosshead speed of 10 mm/min. The maximum load, designated Fmax, and the mode of failure were recorded.

Biodegradation tests were carried out in soil or horticultural substrate at a temperature of $25 \pm 2$ °C, with moisture maintained between 60 and 70% of field capacity. Approximately 50% of the potheight was buried. Mass loss was evaluated after drying to constant mass, and disintegration was classified using a visual scale from 0 to 5.

The same test conditions were also defined as follows. The dry state S corresponded to $23 \pm 2$ °C and $50 \pm 10\%$ relative humidity for 48 hours. The humid state HR corresponded to $23 \pm 2$ °C and 95% relative humidity for 24 hours. The post-irrigation state PR corresponded to base immersion for 60 seconds followed by drainage for 10 minutes with immediate testing. Axial compression was performed on empty pots between flat plates at 10 mm/min, with recording of Fmax in newtons and failure mode. Soil or substrate biodegradation tests were performed at $25 \pm 2$ °C, with 60-70% field capacity, burial of 50% of potheight, sampling at 2, 4, 8, 12, and 16 weeks, determination of mass loss after drying to constant mass, and disintegration assessed on a scale from 0 to 5.

**Physical and dimensional results**

The results demonstrated that all pots exhibited dry apparent density values between 0.49 and 0.80 g/cm$^3$, depending on formulation and dimensional class. Total porosity values ranged between 44 and 66%, simultaneously ensuring air permeability and water retention. Water retention after 24 hours ranged between 16 and 34% by mass, being higher for Example E1 and more moderate for Example E3. Wall thickness ranged between 2.0 and 3.5 mm, increasing with dimensional class.

After humid conditioning and irrigation cycles, dimensional variation, designated $\Delta D$, remained below 3% in all classes. Ovalization remained within defined limits, demonstrating adequate geometric stability even for pots of greater height, particularly Class C containers.

**Mechanical results**

Axial compression tests demonstrated that all pots satisfied the minimum resistance criteria defined for each dimensional class. In Class A pots with dimensions of $4 \times 10$ cm, maximum loads in the post-irrigation state typically ranged between 100 and 185 N. In Class B pots with dimensions of $10 \times 25$ cm, maximum loads ranged between 165 and 285 N. In Class C pots with dimensions of $18 \times 50$ cm, maximum loads ranged between 220 and 360 N.

Example E1 exhibited lower rigidity but sufficient resistance for horticultural use, with progressive failure by denting. Example E2 provided the best compromise between resistance and ductility. Example E3 exhibited the highest maximum loads, maintaining structural integrity even under humid conditions without brittle collapse.

These results demonstrate that the invention is dimensionally scalable while maintaining adequate mechanical performance without the use of non-biodegradable reinforcements.

**Biodegradation results**

Soil tests showed progressive mass loss for all examples and dimensional classes. After 8 weeks, mass loss was generally equal to or greater than 10%, evidencing effective initiation of biodegradation. After 16 weeks, Example E1 and Example E2 reached values greater than 30% in Classes A and B and greater than 25% in Class C. Example E3 exhibited slower biodegradation rates, consistent with its intended increased structural durability.

Visual disintegration assessment confirmed these results, with progressive fragmentation of the pot wall, loss of cohesion, and gradual incorporation of the material into the soil, without formation of persistent plastic residues.

### Relationship between biodegradation and nutritional function

Progressive biodegradation coincided temporally with the horticultural use period of the pot. This allowed gradual release of organic and mineral constituents originating from the microalgae, localized increase in microbial activity in the pot-soil contact zone, and availability of nutrients synchronized with root development.

The nutritional function was maintained independently of the metabolic viability of the microalgae after manufacture, resulting from functional preservation of the algal biomass and its progressive mineralization.

### Conclusion of the experimental tests

The experimental results demonstrate that the biodegradable pots according to the invention simultaneously meet requirements of mechanical resistance, porosity, and dimensional stability. The pots allow controlled biodegradation in soil, adjustable by formulation, ensure gradual and localized supply of nutrients and bio-stimulant compounds, and are applicable to a wide range of dimensions, including diameters from 4 to 20 cm and heights from 6 to 60 cm.

These results confirm the technical feasibility, technical effect, and inventive activity of the proposed solution.

**Table 5** to **Table 10** provide non-limiting experimental data carried out on the different biodegradable pot embodiments of the present disclosure.

**Table 5:** Physical and dimensional properties, including dry apparent density, total porosity, water absorption, and water retention (mean $\pm$ standard deviation) (n = 10 (density); n = 5 (porosity/absorption/retention)

| Example | Class | Dry p_bulk (g/cm$^3$) | Total porosity (%) | WA 2 h (% m/m) | WR 24 h (% m/m) |
|---------|-------|----------------------|--------------------|----------------|------------------|
| E1 | A | 0.49 $\pm$ 0.03 | 66 $\pm$ 4 | 78 $\pm$ 9 | 33 $\pm$ 5 |
| | B | 0.52 $\pm$ 0.03 | 63 $\pm$ 4 | 72 $\pm$ 8 | 30 $\pm$ 4 |
| | C | 0.56 $\pm$ 0.04 | 59 $\pm$ 5 | 65 $\pm$ 7 | 26 $\pm$ 4 |
| E2 | A | 0.58 $\pm$ 0.04 | 57 $\pm$ 4 | 60 $\pm$ 7 | 26 $\pm$ 4 |
| | B | 0.62 $\pm$ 0.04 | 55 $\pm$ 4 | 56 $\pm$ 6 | 25 $\pm$ 3 |
| | C | 0.68 $\pm$ 0.05 | 50 $\pm$ 4 | 49 $\pm$ 6 | 21$\pm$ 3 |
| E3 | A | 0.66 $\pm$ 0.05 | 49 $\pm$ 4 | 45 $\pm$ 6 | 19 $\pm$ 3 |
| | B | 0.74 $\pm$ 0.05 | 46 $\pm$ 4 | 40 $\pm$ 5 | 18 $\pm$ 3 |
| | C | 0.79 $\pm$ 0.05 | 44 $\pm$ 3 | 36 $\pm$ 5 | 16 $\pm$ 2 |

**Table 6:** Wall thickness and dimensional stability parameters, including diameter variation and ovalization after conditioning (mean $\pm$ standard deviation)

| Example | Class | Thickness t (mm) | ΔD after HR (%) | ΔD after PR (%) | Ovalization after PR (%) |
|---------|-------|------------------|-----------------|-----------------|--------------------------|
| E1 | A | 2.0 $\pm$ 0.2 | 1.6 $\pm$ 0.5 | 2.1 $\pm$ 0.7 | 2.2 $\pm$ 0.8 |
| | B | 2.2 $\pm$ 0.2 | 1.8 $\pm$ 0.6 | 2.4 $\pm$ 0.8 | 2.6 $\pm$ 0.9 |
| | C | 2.8 $\pm$ 0.3 | 2.0 $\pm$ 0.7 | 2.9 $\pm$ 0.9 | 3.2 $\pm$ 1.0 |
| E2 | A | 2.3 $\pm$ 0.2 | 1.2 $\pm$ 0.4 | 1.8 $\pm$ 0.6 | 1.9 $\pm$ 0.7 |
| | B | 2.5 $\pm$ 0.2 | 1.4 $\pm$ 0.5 | 2.0 $\pm$ 0.6 | 2.1 $\pm$ 0.7 |
| | C | 3.0 $\pm$ 0.3 | 1.7 $\pm$ 0.6 | 2.4 $\pm$ 0.7 | 2.9 $\pm$ 0.9 |
| E3 | A | 2.6 $\pm$ 0.3 | 1.0 $\pm$ 0.4 | 1.5 $\pm$ 0.5 | 1.6 $\pm$ 0.6 |
| | B | 3.0 $\pm$ 0.3 | 1.2 $\pm$ 0.5 | 1.7 $\pm$ 0.6 | 2.0 $\pm$ 0.7 |
| | C | 3.4 $\pm$ 0.3 | 1.4 $\pm$ 0.5 | 2.0 $\pm$ 0.7 | 2.6 $\pm$ 0.9 |

**Table 7:** Axial compression strength under dry, humid, and post-irrigation conditions, including predominant failure modes (mean $\pm$ standard deviation)

| Example | Class | Fmax S (N) | Fmax HR (N) | Fmax PR (N) | Predominant failure mode |
|---------|-------|-----------|-------------|-------------|--------------------------|
| E1 | A | 175 $\pm$ 22 | 120 $\pm$ 18 | 95 $\pm$ 16 | Denting + local cracks |
|    | B | 265 $\pm$ 30 | 185 $\pm$ 22 | 145 $\pm$ 20 | Progressive ovalization |
|    | C | 380 $\pm$ 45 | 255 $\pm$ 30 | 200 $\pm$ 28 | Mild ovalization/buckling |
| E2 | A | 245 $\pm$ 28 | 175 $\pm$ 20 | 140 $\pm$ 18 | Controlled denting |
|    | B | 355 $\pm$ 38 | 250 $\pm$ 28 | 195 $\pm$ 22 | Denting + late crack |
|    | C | 485 $\pm$ 55 | 330 $\pm$ 40 | 250 $\pm$ 30 | Late ovalization, no brittle collapse |
| E3 | A | 310 $\pm$ 35 | 220 $\pm$ 25 | 175 $\pm$ 20 | Denting + late crack |
|    | B | 470 $\pm$ 55 | 330 $\pm$ 40 | 260 $\pm$ 30 | Denting, high stiffness |
|    | C | 610 $\pm$ 70 | 430 $\pm$ 55 | 330 $\pm$ 45 | Controlled buckling |

**Table 8:** Three-point bending properties of wall specimens under dry and humid conditions (mean $\pm$ standard deviation)

| Example | Class | $\sigma$_flex S (MPa) | $\sigma$_flex HR (MPa) | E_flex S (GPa) |
|---------|-------|-----------------------|------------------------|----------------|
| E1 | B | 4.8 $\pm$ 0.9 | 2.6 $\pm$ 0.6 | 0.35 $\pm$ 0.08 |
| E2 | B | 7.2 $\pm$ 1.1 | 3.9 $\pm$ 0.7 | 0.60 $\pm$ 0.10 |
| E3 | C | 9.5 $\pm$ 1.3 | 5.2 $\pm$ 0.9 | 0.95 $\pm$ 0.15 |

**Table 9:** Biodegradation behavior expressed as mass loss over time in soil or horticultural substrate at 25 °C (mean $\pm$ standard deviation) (n = 5 per time point (destructive testing)

| Example | Class | 2 weeks | 4 weeks | 8 weeks | 12 weeks | 16 weeks |
|---------|-------|---------|---------|---------|----------|----------|
| E1 | A | 5.2 $\pm$ 1.0 | 9.8 $\pm$ 1.6 | 18.5 $\pm$ 2.8 | 28.6 $\pm$ 3.5 | 42.1 $\pm$ 4.2 |
|    | B | 4.0 $\pm$ 0.8 | 8.1 $\pm$ 1.3 | 15.2 $\pm$ 2.4 | 24.0 $\pm$ 3.2 | 38.0 $\pm$ 4.0 |
|    | C | 3.0 $\pm$ 0.7 | 6.2 $\pm$ 1.1 | 12.1 $\pm$ 2.0 | 19.5 $\pm$ 2.8 | 31.2 $\pm$ 3.6 |
| E2 | A | 3.5 $\pm$ 0.8 | 7.0 $\pm$ 1.2 | 12.0 $\pm$ 2.0 | 20.5 $\pm$ 2.9 | 33.0 $\pm$ 3.8 |
|    | B | 2.8 $\pm$ 0.7 | 6.0 $\pm$ 1.1 | 11.5 $\pm$ 1.9 | 19.0 $\pm$ 2.7 | 31.5 $\pm$ 3.6 |
|    | C | 2.2 $\pm$ 0.6 | 5.0 $\pm$ 1.0 | 10.2 $\pm$ 1.8 | 16.8 $\pm$ 2.5 | 27.5 $\pm$ 3.3 |
| E3 | A | 2.5 $\pm$ 0.7 | 5.2 $\pm$ 1.0 | 10.5 $\pm$ 1.8 | 16.0 $\pm$ 2.4 | 26.0 $\pm$ 3.2 |
|    | B | 2.0 $\pm$ 0.6 | 4.5 $\pm$ 0.9 | 9.5 $\pm$ 1.7 | 14.5 $\pm$ 2.2 | 24.5 $\pm$ 3.0 |
|    | C | 1.6 $\pm$ 0.5 | 3.8 $\pm$ 0.8 | 8.8 $\pm$ 1.6 | 13.0 $\pm$ 2.0 | 22.5 $\pm$ 2.8 |

**Table 10:** Visual disintegration score (0-5) as a function of time during soil biodegradation at 25 °C (mean $\pm$ standard deviation) (n = 5 per time point)

| Example | Class | 4 weeks | 8 weeks | 12 weeks | 16 weeks |
|---------|-------|---------|---------|----------|----------|
| E1 | A | 1.6 $\pm$ 0.5 | 3.2 $\pm$ 0.6 | 4.2 $\pm$ 0.5 | 4.8 $\pm$ 0.4 |
|    | B | 1.3 $\pm$ 0.5 | 2.8 $\pm$ 0.6 | 3.8 $\pm$ 0.6 | 4.5 $\pm$ 0.5 |
|    | C | 1.0 $\pm$ 0.4 | 2.2 $\pm$ 0.6 | 3.1 $\pm$ 0.6 | 3.8 $\pm$ 0.6 |
| E2 | A | 1.2 $\pm$ 0.4 | 2.5 $\pm$ 0.6 | 3.4 $\pm$ 0.6 | 4.0 $\pm$ 0.6 |
|    | B | 1.0 $\pm$ 0.4 | 2.2 $\pm$ 0.6 | 3.1 $\pm$ 0.6 | 3.6 $\pm$ 0.6 |
|    | C | 0.8 $\pm$ 0.4 | 1.9 $\pm$ 0.5 | 2.6 $\pm$ 0.6 | 3.1 $\pm$ 0.6 |
| E3 | A | 1.0 $\pm$ 0.4 | 2.0 $\pm$ 0.5 | 2.8 $\pm$ 0.6 | 3.2 $\pm$ 0.6 |

(continued)

| Example | Class | 4 weeks | 8 weeks | 12 weeks | 16 weeks |
|---|---|---|---|---|---|
| | B | 0.7 ± 0.3 | 1.7 ± 0.5 | 2.4 ± 0.6 | 2.8 ± 0.6 |
| | C | 0.5 ± 0.3 | 1.2 ± 0.4 | 1.8 ± 0.5 | 2.2 ± 0.6 |

**Formulation-specific recommendations by dimensional class**

In an embodiment, formulation E1 is recommended for Class A and Class B containers. This recommendation is based on the rapid biodegradation behavior of formulation E1 combined with good water retention performance. In a further embodiment, formulation E1 is also viable for Class C containers, provided that the pot wall thickness is increased and/or a reinforcing ring is incorporated, in order to ensure sufficient mechanical integrity for the larger dimensional class.

In an embodiment, formulation E2 is recommended for Class A, Class B, and Class C containers. Formulation E2 provides the best overall compromise between mechanical resistance, porosity, biodegradation rate, and horticultural performance. In a preferred aspect, formulation E2 satisfies all defined acceptance and selection criteria ("gates") across all tested dimensional classes, including Classes A, B, and C.

In an embodiment, formulation E3 is recommended for Class B and Class C containers. Formulation E3 is characterized by increased structural durability. In a further embodiment, in order to comply with a cumulative mass loss of at least 25% after 16 weeks in Class C containers, the formulation may be adjusted by reducing binder content by approximately 1-2% and/or by increasing porosity by approximately 3-5%. These adjustments allow tuning of the biodegradation rate while preserving structural performance.

**Leachate conductivity and pH following irrigation and substrate exposure**

Leachate conductivity and pH were evaluated under post-irrigation conditions followed by seven days in horticultural substrate. In an embodiment, for formulation E1, the change in electrical conductivity, designated $\Delta EC$, ranged from +0.15 to +0.30 mS/cm, while the measured pH ranged from 6.0 to 7.2. In an embodiment, for formulation E2, $\Delta EC$ ranged from +0.10 to +0.25 mS/cm, with pH values also ranging from 6.0 to 7.2. In an embodiment, for formulation E3, $\Delta EC$ ranged from +0.05 to +0.15 mS/cm, with pH values likewise ranging from 6.0 to 7.2.

These leachate results support the existence of gradual release of soluble constituents originating from the biodegradable pot and the incorporated microalgal biomass. In a preferred aspect, the observed conductivity and pH variations demonstrate gradual release behavior without constraining the invention to specific nitrogen, phosphorus, or potassium release profiles.

**Fixed dimensions and dimensional ratios**

In an embodiment, Class A pots have a diameter of 4 cm and a height of 10 cm, corresponding to a fixed height-to-diameter ratio of 2.5. In an embodiment, Class B pots have a diameter of 10 cm and a height of 25 cm, likewise corresponding to a fixed height-to-diameter ratio of 2.5. In an embodiment, Class C pots have a diameter of 18 cm and a height of 50 cm, corresponding to a height-to-diameter ratio of approximately 2.78.

These dimensions and ratios are fixed reference geometries used for formulation selection, mechanical validation, biodegradation assessment, and horticultural performance evaluation.

**Table 11** to **Table 15** provide non-limiting experimental data carried out on the different biodegradable pot embodiments of the present disclosure.

**Table 11:** Physical and dimensional results of biodegradable pots by fixed dimensional class, including wall thickness, dry apparent density, total porosity, water absorption, and water retention (n = 10 (thickness, density) | n = 5 (porosity, WA, WR)

| Example | Class | t (mm) | Dry p_bulk (g/cm$^3$) | Porosity (%) | WA 2 h (% m/m) | WR 24 h (% m/m) |
|---|---|---|---|---|---|---|
| E1 | A (4×10) | 2.0 ± 0.2 | 0.49 ± 0.03 | 66 ± 4 | 80 ± 9 | 34 ± 5 |
| | B (10×25) | 2.2 ± 0.2 | 0.52 ± 0.03 | 63 ± 4 | 73 ± 8 | 30 ± 4 |
| | C (18×50) | 2.9 ± 0.3 | 0.57 ± 0.04 | 58 ± 5 | 64 ± 7 | 26 ± 4 |
| E2 | A (4×10) | 2.3 ± 0.2 | 0.58 ± 0.04 | 57 ± 4 | 61 ± 7 | 26 ± 4 |
| | B | 2.5 ± | 0.62 ± 0.04 | 55 ± 4 | 56 ± 6 | 25 ± 3 |

(continued)

| Example | Class | t (mm) | Dry p_bulk (g/cm$^3$) | Porosity (%) | WA 2 h (% m/m) | WR 24 h (% m/m) |
|---|---|---|---|---|---|---|
| | (10×25) | 0.2 | | | | |
| | C (18×50) | 3.1 ± 0.3 | 0.68 ± 0.05 | 50 ± 4 | 49 ± 6 | 21 ± 3 |
| E3 | A (4×10) | 2.6 ± 0.3 | 0.66 ± 0.05 | 49 ± 4 | 46 ± 6 | 19 ± 3 |
| | B (10×25) | 3.0 ± 0.3 | 0.74 ± 0.05 | 46 ± 4 | 40 ± 5 | 18 ± 3 |
| | C (18×50) | 3.5 ± 0.3 | 0.80 ± 0.05 | 44 ± 3 | 36 ± 5 | 16 ± 2 |

Table 12: Dimensional stability of biodegradable pots by fixed dimensional class, including diameter variation, height variation, and ovalization after humid conditioning and post-irrigation (n = 10; measurements taken in two orthogonal directions and at three heights)

| Example | Class | ΔD after HR (%) | ΔD after PR (%) | Ovalization after PR (%) | ΔH after PR (%) |
|---|---|---|---|---|---|
| E1 | A (4×10) | 1.6 ± 0.5 | 2.1 ± 0.7 | 2.2 ± 0.8 | 1.1 ± 0.4 |
| | B (10×25) | 1.8 ± 0.6 | 2.4 ± 0.8 | 2.6 ± 0.9 | 1.3 ± 0.5 |
| | C (18×50) | 2.1 ± 0.7 | 2.9 ± 0.9 | 3.2 ± 1.0 | 1.6 ± 0.6 |
| E2 | A (4×10) | 1.2 ± 0.4 | 1.8 ± 0.6 | 1.9 ± 0.7 | 0.9 ± 0.4 |
| | B (10×25) | 1.4 ± 0.5 | 2.0 ± 0.6 | 2.1 ± 0.7 | 1.0 ± 0.4 |
| | C (18×50) | 1.7 ± 0.6 | 2.4 ± 0.7 | 2.9 ± 0.9 | 1.3 ± 0.5 |
| E3 | A (4×10) | 1.0 ± 0.4 | 1.5 ± 0.5 | 1.6 ± 0.6 | 0.8 ± 0.3 |
| | B (10×25) | 1.2 ± 0.5 | 1.7 ± 0.6 | 2.0 ± 0.7 | 0.9 ± 0.4 |
| | C (18×50) | 1.5 ± 0.5 | 2.0 ± 0.7 | 2.6 ± 0.9 | 1.2 ± 0.5 |

Table 13: Mechanical performance of biodegradable pots by fixed dimensional class, expressed as axial compression strength under dry, humid, and post-irrigation conditions, with predominant failure modes (n = 10; empty container, flat plates, 10 mm/min)

| Example | Class | Fmax S (N) | Fmax HR (N) | Fmax PR (N) | Predominant failure mode |
|---|---|---|---|---|---|
| E1 | A (4×10) | 185 ± 20 | 130 ± 16 | 100 ± 15 | Denting + local cracks |
| | B (10×25) | 305 ± 35 | 210 ± 25 | 165 ± 20 | Progressive ovalization |
| | C (18×50) | 420 ± 50 | 285 ± 35 | 220 ± 30 | Mild ovalization/buckling |
| E2 | A (4×10) | 260 ± 30 | 185 ± 22 | 150 ± 18 | Controlled denting |
| | B (10×25) | 390 ± 45 | 275 ± 32 | 215 ± 25 | Late crack, no brittle collapse |
| | C (18×50) | 520 ± 60 | 360 ± 45 | 275 ± 35 | Late ovalization, good recovery |
| E3 | A (4×10) | 330 ± 40 | 235 ± 28 | 185 ± 22 | High stiffness, late crack |
| | B (10×25) | 520 ± 60 | 365 ± 45 | 285 ± 35 | Denting, high stability |
| | C (18×50) | 680 ± 80 | 475 ± 60 | 360 ± 50 | Controlled buckling (no brittle failure) |

Table 14: Biodegradation behavior of biodegradable pots in soil or horticultural substrate at 25 °C, expressed as mass loss over time for different formulations and dimensional classes (n = 5 per time point (destructive); dried to constant mass before weighing)

| Example | Class | 2 weeks | 4 weeks | 8 weeks | 12 weeks | 16 weeks |
|---|---|---|---|---|---|---|
| E1 | A (4×10) | 5.6 ± 1.0 | 10.3 ± 1.6 | 19.2 ± 2.8 | 29.5 ± 3.5 | 43.0 ± 4.2 |
| | B (10×25) | 4.3 ± 0.9 | 8.6 ± 1.4 | 16.0 ± 2.4 | 24.8 ± 3.2 | 39.0 ± 4.0 |
| | C (18×50) | 3.2 ± 0.8 | 6.6 ± 1.1 | 12.8 ± 2.0 | 20.3 ± 2.8 | 32.2 ± 3.6 |

(continued)

| Example | Class | 2 weeks | 4 weeks | 8 weeks | 12 weeks | 16 weeks |
|---------|-------|---------|---------|---------|----------|----------|
| E2 | A (4×10) | 3.7 ± 0.8 | 7.3 ± 1.2 | 12.6 ± 2.0 | 21.2 ± 2.9 | 33.8 ± 3.8 |
| | B (10×25) | 3.0 ± 0.7 | 6.3 ± 1.1 | 12.0 ± 1.9 | 19.8 ± 2.7 | 32.5 ± 3.6 |
| | C (18×50) | 2.4 ± 0.6 | 5.2 ± 1.0 | 10.8 ± 1.8 | 17.5 ± 2.5 | 28.5 ± 3.3 |
| E3 | A (4×10) | 2.7 ± 0.7 | 5.5 ± 1.0 | 10.9 ± 1.8 | 16.6 ± 2.4 | 26.8 ± 3.2 |
| | B (10×25) | 2.2 ± 0.6 | 4.7 ± 0.9 | 9.8 ± 1.7 | 15.0 ± 2.2 | 25.0 ± 3.0 |
| | C (18×50) | 1.8 ± 0.5 | 4.0 ± 0.8 | 9.0 ± 1.6 | 13.4 ± 2.0 | 23.2 ± 2.8 |

**Table 15:** Visual disintegration of biodegradable pots during soil biodegradation at 25 °C, expressed as disintegration score over time for different formulations and dimensional classes (n = 5 per time point)

| Example | Class | 4 weeks | 8 weeks | 12 weeks | 16 weeks |
|---------|-------|---------|---------|----------|----------|
| E1 | A (4×10) | 1.8 ± 0.5 | 3.4 ± 0.6 | 4.3 ± 0.5 | 4.8 ± 0.4 |
| | B (10×25) | 1.4 ± 0.5 | 3.0 ± 0.6 | 3.9 ± 0.6 | 4.5 ± 0.5 |
| | C (18×50) | 1.1 ± 0.4 | 2.4 ± 0.6 | 3.2 ± 0.6 | 3.9 ± 0.6 |
| E2 | A (4×10) | 1.3 ± 0.4 | 2.7 ± 0.6 | 3.5 ± 0.6 | 4.1 ± 0.6 |
| | B (10×25) | 1.1 ± 0.4 | 2.3 ± 0.6 | 3.2 ± 0.6 | 3.7 ± 0.6 |
| | C (18×50) | 0.9 ± 0.4 | 2.0 ± 0.5 | 2.7 ± 0.6 | 3.2 ± 0.6 |
| E3 | A (4×10) | 1.1 ± 0.4 | 2.1 ± 0.5 | 2.9 ± 0.6 | 3.3 ± 0.6 |
| | B (10×25) | 0.8 ± 0.3 | 1.8 ± 0.5 | 2.5 ± 0.6 | 2.9 ± 0.6 |
| | C (18×50) | 0.6 ± 0.3 | 1.3 ± 0.4 | 1.9 ± 0.5 | 2.3 ± 0.6 |

The present invention distinguishes itself from solutions known in the state of the art, including peat-based biodegradable pots, conventional molded fiber products, pressed paper or cardboard containers, compostable bioplastics such as PLA or PHA, and organic mixtures lacking active biological functionalization. In an embodiment, the invention achieves objective and demonstrable technical advantages that are not disclosed, suggested, or rendered obvious by the known solutions.

In a preferred aspect, the invention provides an unprecedented synergistic combination between a structural function and a bioactive function. Unlike existing solutions, which are limited to a temporary structural role, the invention integrates microalgae directly into the structural matrix of the pot in controlled proportions, preferably in the range of 3-10% by mass on a dry basis. This integration enables progressive release of bio-stimulant compounds during both use and biodegradation of the container, allows direct interaction with the plant root system and soil microbiota, and improves early plant establishment without the need for immediate additional fertilization. This dual structural and bioactive function is neither described nor suggested in the known state of the art.

According to a further embodiment, the invention enables controlled adjustment of service life and biodegradation behavior. By simple adjustment of the relative proportions of cellulosic filler, biodegradable binder, and microalgal biomass, the invention allows predictable modulation of functional integrity time, typically from 4 to 16 weeks, control of mass loss rate and soil disintegration, and control of the moment at which the pot ceases to act as a physical barrier to root growth. In contrast, peat-based pots degrade in an uncontrolled manner, bioplastics maintain excessive integrity and persist in soil, and conventional molded fiber products collapse prematurely or require synthetic additives. The invention addresses this technical problem through gradual and functional biodegradation aligned with the plant growth cycle.

In an embodiment, the pots of the invention simultaneously exhibit high functional porosity and sufficient mechanical resistance. Total porosity preferably ranges from 40 to 70%, promoting root aeration and water retention, while mechanical resistance remains adequate for handling, transport, and planting, including under humid conditions. Known solutions typically fail to achieve this balance, as highly porous structures lose resistance when wet, whereas mechanically resistant structures are dense and poorly permeable. The invention demonstrates that this technical compromise can be achieved in pots having diameters from 4 to 20 cm and heights from 6 to 60 cm, which is neither trivial nor obvious.

In a further embodiment, the invention is dimensionally scalable without loss of performance. Acceptable technical performance is maintained in small pots corresponding to Class A, medium pots corresponding to Class B, and large and tall pots corresponding to Class C, including control of ovalization and buckling. This scalability is achieved without the use of plastic reinforcements, synthetic meshes, or non-biodegradable additives, representing a significant technical advantage for commercial and industrial applications.

Preferably, the invention exhibits full compatibility with soil and horticultural substrates. During biodegradation tests, no persistent plastic residues were observed, no release of contaminants incompatible with agricultural use occurred, and the material was incorporated into the soil as organic matter. This contrasts with known solutions labeled as biodegradable that require industrial composting, fragment into microplastics, or negatively alter soil properties. The invention ensures true biodegradation under real use conditions without additional infrastructure.

According to a further embodiment, the invention enables valorization of natural biomass and by-products. The use of microalgae and natural cellulosic fibers or agro-forestry residues reduces dependence on fossil raw materials, valorizes low-economic-value by-products, and aligns the invention with principles of circular economy. This integrated technical approach is not evident in the traditional field of biodegradable containers.

In a preferred aspect, the invention further distinguishes itself by manufacturing simplicity and industrial compatibility. The invention employs aqueous processes without organic solvents, is compatible with molding, pressing, or low-temperature thermoforming, and allows industrial-scale production with controlled costs. In contrast, many known solutions rely on complex extrusion, high temperatures, or expensive specialty polymers.

Finally, the advantages described result from a technical effect rather than from a mere juxtaposition of known features. The specific combination of microalgae embedded within a structural matrix, porous cellulosic filler, biodegradable binder adapted to humid conditions, and scalable pot geometry leads to a global performance. Accordingly, the invention simultaneously solves the technical problems of uncontrolled biodegradation, insufficient mechanical resistance under humid conditions, and lack of biological functionalization in known biodegradable containers.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. Biodegradable pot for plant growth, comprising:

   a microalga as biostimulant;
   a natural cellulosic filler; and
   a biodegradable binder;
   wherein the microalga is structurally embedded within a porous matrix formed by the natural filler and the binder, such that the pot provides controlled water retention and progressive release of biostimulant compounds during biodegradation in soil or substrate;
   wherein the natural filler is a cellulosic filler selected from fibrous and/or comminuted/ground biomass derived from: gorse, heather, broom, eucalyptus, or cellulose, or combinations thereof;
   optionally, the pot comprises a plurality of drainage holes or slits.

2. Biodegradable pot for plant growth, comprising:

   2-15% ($w_{microalga}/w_{dry\ weight\ of\ the\ pot}$) a microalga as biostimulant relative to the dry weight of the pot; preferably 3-10% ($w_{microalga}/w_{dry\ weight\ of\ the\ pot}$); more preferably 2-3% ($w_{microalga}/w_{dry}$ weight of the pot);
   60-85% ($w_{natural\ filler}/w_{dry\ weight\ of\ the\ pot}$) a natural filler relative to the dry weight of the pot; preferably 65-80% ($w_{natural\ filler}/w_{dry\ weight}$ of the pot); and
   8-25% ($w_{suitable\ binder}/w_{dry\ weight\ of\ the\ pot}$) a biodegradable binder relative to the dry weight of the pot; preferably 12-20% ($w_{suitable\ binder}/w_{dry}$ weight of the $_{pot}$).

3. Biodegradable pot according to the previous claim, wherein the microalga is incorporated in the form of: whole microalga, microalga cell, microalga extract, microalga powder, microalga pigment, microalga lipid, microalga protein, or microalga biomass.

4. Biodegradable pot according to any of the previous claims, wherein the natural filler is incorporated in the form of biomass, fiber, powder, shredded material, or extract; preferably wherein the natural filler comprises fibrous and/or comminuted biomass derived from one or more plant species selected from gorse *(Ulex* spp.), heather (*Calluna* spp. and *Erica* spp.), broom (*Cytisus* spp.), eucalyptus (*Eucalyptus* spp.), cellulose-rich agricultural residues, or mixtures thereof.

5. Biodegradable pot according to any of the previous claims, wherein the dry apparent density ranges from 0.45 to 0.85 g/cm$^3$; preferably from 0.5 to 0.7 g/cm$^3$.

6. Biodegradable pot according to any of the previous claims, wherein the total porosity ranges from 40% to 70% and wherein the pot comprises pores having an average pore size of from 0.1 to 2 $\mu$m; preferably the total porosity ranges from 50% to 65% the pot comprises pores having an average pore size of from 0.5 to 1 $\mu$m.

7. Biodegradable pot according to any of the previous claims, wherein the biodegradable binder is selected from the group consisting of starch-based binders, modified starches, cellulose derivatives, alginates, lignin-based binders, protein-based binders, natural latex, polyvinyl alcohol, or mixtures thereof.

8. Biodegradable pot according to any of the previous claims, wherein the axial compressive strength is at least 100 N in a dry state and at least 60 N in a wet state; preferably the axial compressive strength ranges from 120 to 600 N in the dry state and from 70 to 350 N in the wet state.

9. Biodegradable pot according to any of the previous claims, wherein the flexural strength, measured by a three-point bending test, ranges from 2 to 12 MPa in a dry state and of from 1 to 6 MPa in a wet state.

10. Biodegradable pot according to any of the previous claims, wherein the flexural modulus ranges from 0.2 to 1.2 GPa in the dry state.

11. Biodegradable pot according to any of the previous claims, wherein the water retention is superior to 15 wt.%; preferably ranging from 20-40 wt.%.

12. Biodegradable pot according to any of the previous claims comprising a base having a diameter of from 4 to 20 cm; a body having a conical or tapered shape and a height of from 6 to 60 cm; and a top wider than the base, wherein the body has a wall thickness of from 1.5 to 4.0 mm; preferably 2 to 3 mm.

13. Biodegradable pot according to any of the previous claims, wherein the pot is configured for modular stacking; preferably horizontal modular stacking.

14. Biodegradable pot according to any of the previous claims, wherein the pot maintains functional integrity for a period ranging from 4 to 16 weeks and undergoes functional structural loss within from 2 to 8 months after contact with soil or substrate.

15. Biodegradable pot according to any of the previous claims, further comprising embedded additives, preferably additives selected from plant nutrients, secondary biostimulants, and soil-conditioning agents, wherein the additives are selected from nitrogen-, phosphorus-, potassium-, calcium-, magnesium- or sulphur-containing compounds, micronutrients, humic acids, fulvic acids, amino acids, protein hydrolysates, polysaccharides, chitosan, seaweed extracts, biochar, lignin, tannins, natural clays, zeolites, diatomaceous earth, calcium carbonate, or mixtures thereof.

16. Biodegradable pot according to any of the previous claims, wherein the microalga and any optional embedded additives are released into the soil or substrate through a combined mechanism of hydration, diffusion, and progressive biodegradation of the pot matrix, thereby providing a gradual and localized biostimulant effect synchronized with plant root development.

17. Use of the biodegradable pot described in any of claims 1-16 as a plant container for seedling production, transplantation, horticulture, forestry, home gardening, or greenhouse cultivation, wherein the pot is placed directly into soil or substrate without removal.

Fig. 1

**Fig. 2**

**EUROPEAN SEARCH REPORT**

Application Number

EP 25 22 7788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 427 583 A1 (NEISSER GEOPRODUKTE GMBH [DE]) 11 September 2024 (2024-09-11) * paragraphs [0006], [0054], [0032], [0016], [0010], [0043], [0035], [0066], [0088], [0057]; claim 1; figures 1-9 * | 1-17 | INV. A01G9/029 |
| A | WO 2024/213636 A1 (HOLLAND BIOPRODUCTS B V [NL]) 17 October 2024 (2024-10-17) * page 8 lines 13-19; claim 18 * | 1-17 | |
| A | JP 2021 528082 A (/) 21 October 2021 (2021-10-21) * paragraphs [0004], [0011] * | 1-17 | |
| A | CN 110 199 722 A (GUANGXI HENGSHENG WATER ENVIRONMENT MAN CO LTD) 6 September 2019 (2019-09-06) * paragraph [0017]; claim 1 * | 1-17 | |
| A | US 2014/250783 A1 (KELLER CHRIS [US]) 11 September 2014 (2014-09-11) * claims 1-20; figure 1 * | 1-17 | TECHNICAL FIELDS SEARCHED (IPC)<br><br>A01G |
| A | CN 107 580 912 A (ANHUI SHENKE PLASTIC CO LTD) 16 January 2018 (2018-01-16) * claims 1-5 * | 1-17 | |

The present search report has been drawn up for all claims

| Place of search | Date of completion of the search | Examiner |
|---|---|---|
| The Hague | 28 April 2026 | Spitz, Thomas |

EPO FORM 1503 03.82 (P4C01)

## ANNEX TO THE EUROPEAN SEARCH REPORT
## ON EUROPEAN PATENT APPLICATION NO.

EP 25 22 7788

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2026

| Patent document cited in search report | | Publication date | Patent family member(s) | | Publication date |
|---|---|---|---|---|---|
| EP 4427583 | A1 | 11-09-2024 | DE 102023105488 A1 | | 12-09-2024 |
| | | | EP 4427583 A1 | | 11-09-2024 |
| WO 2024213636 | A1 | 17-10-2024 | NL 2034538 B1 | | 15-10-2024 |
| | | | WO 2024213636 A1 | | 17-10-2024 |
| JP 2021528082 | A | 21-10-2021 | EP 3809829 A1 | | 28-04-2021 |
| | | | ES 2928824 T3 | | 22-11-2022 |
| | | | JP 2021528082 A | | 21-10-2021 |
| | | | PT 3809829 T | | 06-10-2022 |
| | | | US 2021171413 A1 | | 10-06-2021 |
| | | | WO 2019243587 A1 | | 26-12-2019 |
| CN 110199722 | A | 06-09-2019 | NONE | | |
| US 2014250783 | A1 | 11-09-2014 | NONE | | |
| CN 107580912 | A | 16-01-2018 | NONE | | |

EPO FORM P0459

For more details about this annex : see Official Journal of the European Patent Office, No. 12/82

**REFERENCES CITED IN THE DESCRIPTION**

**Patent documents cited in the description**

- US 8088460 B
- WO 20219044726 A1
- US 20160050857 A
- WO 2023048561 A
- US 20200375195 A
- US 20200214286 A
- US 20210251230 A